(19) Europäisches Patentamt
European Patent Office
Office européen des brevets

(11) **EP 4 779 721 A2**

(12) **EUROPEAN PATENT APPLICATION**

(43) Date of publication:
**22.07.2026   Bulletin 2026/30**

(21) Application number: **26175561.5**

(22) Date of filing: **19.07.2024**

(51) International Patent Classification (IPC):
***H01M 4/587*** (2010.01)

(52) Cooperative Patent Classification (CPC):
**H01M 4/134; H01M 4/13; H01M 4/362;
H01M 4/386; H01M 4/483; H01M 4/485;
H01M 4/587;** H01M 2004/027; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.08.2023   NO 20230903
23.08.2023   NO 20230904
24.08.2023   NO 20230905
24.08.2023   NO 20230911**

(62) Document number(s) of the earlier application(s) in
accordance with Art. 76 EPC:
**24748300.1 / 4 767 370**

(71) Applicant: **Cenate AS
1825 Tomter (NO)**

(72) Inventors:
• **LARSSON, Linn**
**N-0575 Oslo (NO)**
• **REYES, Fernando**
**N-0657 Oslo (NO)**
• **PONNIAH, Vajeeston**
**N-0481 Oslo (NO)**
• **KOLDEMIR, Unsal**
**N-1281 Oslo (NO)**
• **CAVALLO, Carmen**
**N-1814 Askim (NO)**
• **CAZZOLARO, Martina**
**N-1153 Oslo (NO)**
• **SØRBY, Magnus H.**
**N-0687 Oslo (NO)**
• **FILTVEDT, Werner**
**N-1814 Askim (NO)**
• **KIRKENGEN, Martin**
**N-1814 Askim (NO)**
• **SAUAR, Erik**
**N-0860 Oslo (NO)**

(74) Representative: **Acapo Onsagers AS
Edvard Griegs vei 1
5059 Bergen (NO)**

Remarks:
This application was filed on 29-04-2026 as a
divisional application to the application mentioned
under INID code 62.

(54) **SILICON-BASED MICRO-SIZED PARTICLES AND USE OF THEM IN SECONDARY LIBS**

(57)     The present invention relates to silicon- and carbon-based composite particles, wherein each of the silicon-based composite particles is composed of a bulk material having a plurality of nanoscaled silicon domains embedded therein, and where the bulk material comprises carbon in a total amount of from 5 to 50 atom%, based on the total mass of the silicon-based composite particles, where the bulk material comprises a plurality of nanoscaled silicon domains embedded in a first matrix comprising nanoscale silicon carbide domains, and the particles, when subjected to XRD analysis applying unmonochromated CuKα radiation, exhibit one peak at around 28° having a Full Width at Half Maximum (FWHM) in the range from 0.5° to 8° and one peak around 36° having a FWHM in the range from 1° to 10°.

Figure 3

EP 4 779 721 A2

## Description

The present invention relates to silicon-based particles suitable for use as the active material in negative electrodes in secondary lithium-ion batteries (LIBs).

## Background

Carbon-containing fossil fuels covers currently around 80 % of the global energy demand. The major part of the fossil fuels are combusted with varying degree of cleaning of the produced exhaust/combustion gases before venting them to the atmosphere. These emissions amount to a major pollution problem, a global warming problem, and an ocean acidification problem. There is therefore a growing desire and interest in the society for developing and implementing climate neutral and non-polluting alternatives.

Electric power is a versatile form of energy which hardly pollutes when used to provide heat, drive electric engines, run electronics, etc. Furthermore, some sectors in the society require portable storage of electric energy to enable electrification. Secondary lithium-ion batteries (LIBs) are presently the best commercially available battery type for applications needing high volumetric and gravimetric energy storage densities and high effect delivering capacities. However, there is a need for batteries having higher storage densities than what presently commercially available LIBs may provide to fully take advantage of the electrification option.

The major energy storing constraint of present LIBs is their graphite-based negative electrodes since graphite has a relatively limited capacity to store lithium. There is therefore a desire in the battery sector to find other and better suited materials than graphite as the active material of the negative electrode of LIBs.

## Prior art

Silicon is known to have a relatively strong capability for taking up lithium and form a silicon and lithium alloy. At typical ambient temperatures, the most lithiated phase of silicon is $Li_{3.75}Si$ which has a theoretic specific capacity of 3579 mAh/g, as opposed to the graphite's theoretical specific energy of 372 mAh/g. The battery industry has therefore for more than a decade sought to find a solution to apply silicon as the active material in the negative electrode of secondary LIBs.

However, the lithium uptake causes a significant volume fluctuation of the silicon material. At is most lithiated state of $Li_{3.75}Si$, the silicon material has a volume of around 320 % higher as compared to its non-lithiated state. Also, electrolyte contacting the surface of the active material usually reacts and forms a lithium-containing solid phase known as the solid electrolyte interface layer (SEI). This SEI-layer represents an irreversible loss of lithium in the electrochemical cell which correspondingly reduces its energy storage capacity. Since the formation of the SEI-layer occurs mainly during the first charge-discharge cycle, the magnitude of irreversible loss of lithium associated with the SEI-layer formation is often represented by a first cycle efficiency (FCE) measure.

Furthermore, the volume changes of the silicon material over a lithiation and delithiation (charge/discharge) cycle has shown to cause severe problems both with structural degradation/disintegration of the silicon material and instability of the SEI-layer, leading to unacceptably low cyclabilities and large capacity losses of the LIBs. This integrity problem of the silicon material has been suggested solved by applying the silicon in the form of nanoscaled particles, typically less than 200 nm, preferably with a surface coating.

Sourice et al. (2016) [Ref 1] discloses producing amorphous silicon core particles of 30 nm diameter by laser-driven chemical vapour pyrolysis (LCVP) of silane gas diluted in helium. The particles are given a 1 nm thick carbon coating made by a second LCVP stage of ethylene gas. The particles are reported to, after 500 charge/discharge cycles, retaining a capacity of 1250 mAh.g-1 at a C/5 rate and 800 mAh.g-1 at 2C, with an outstanding coulombic efficiency of 99.95%.

It is further known that nanoscaled silicon-based particles containing other elements may be manufactured in industrial scale by thermally induced decomposition of a mixture of precursor gases. An example of this is known from WO 2021/160824 which discloses manufacturing amorphous particles with a diameter of from 10 to 200 nm of silicon alloyed with from 0.05 to 2 atom% of C and/or N by simultaneous thermally induced decomposition of silicon and carbon containing gases. In an example embodiment, $Si_{0.98}C_{0.02}$ particles are shown made by passing a homogeneous gaseous mixture of silane and ethene preheated to 400 °C and then passing the mixture into a reactor where it becomes mixed with heated nitrogen gas to a temperature giving a temperature in the resulting gas mixture of 810 °C. The relative amounts of the gases in the final gas mixture in the reactor were approximately 28 mole% silane, 1.5 mole% ethene and the rest (~70 mole%) was nitrogen. The residence time was approx. 1 second. The particles are described to have a homogenous structure.

Orthner et al. 2021 [Ref 2] reports a study on formation of amorphous silicon-based particles by flowing a mixture of silane and ethylene gas diluted in nitrogen at atmospheric pressure through a tubular hot-wall reactor at 640, 690, and 1100 °C. The residence time was from 1 to 5 seconds. The gas mixture had a concentration of silane gas of from 10 to 30 viol% and ethylene gas of from 0 to 11.3 vol%. The particles made at 640 and 690 °C were found to be both amorphous and homogeneous with no or only some partial crystallization for those made at 640 and 690 °C, respectively. The particle size varied from 80 to 300 nm, with an average size of 200 nm. XRD analysis showed no formation of SiC. An XPS analysis showed that the carbon content in the amorphous particles decreased almost linearly from the particle surface and into the bulk of the particle. The initial capacity of the particles was found to be 3070 mAh/g which dropped to 2200 mAh/g after the second cycle, but the Coulombic efficiency levelled out at above 99.5 %. The high Coulombic efficiency was attributed to low SEI-layer formation due to the relatively high presence of carbon at the particle surface. However, the particles made at 1100 °C were found to consist of a mixture of crystalline Si (about 15 wt%), amorphous Si (about 14 wt%) and amorphous SiC (about 71 wt%). The crystallite size of the Si was found to be 70 nm. Orthner informs further that the formation of SiC was found to be disadvantageous due to particles exhibiting significantly lower first cycle efficiency and specific capacity (of 917 mAh/g) compared to pure Si.

WO 2022/200606 discloses that a heat treatment at relatively high temperature and long endurance may transform amorphous structures into crystalline structures. The document discloses forming carbon alloyed silicon particles by a thermally induced decomposition of a mixture of precursor gases as in WO 2021/160824 above, and then heat treat them at 800 to 900 °C for 10 to 240 minutes. The heat treated particles are disclosed to have a BET from 25 to 180 $m^2$/g (approx. 15 to 110 nm in diameter), a total content of from 0.05 to 20 atom% C and/or N and contain nanosized crystallites of 1 to 15 nm in diameter embedded therein.

It is further known that baking nanoscaled silicon particles in a carbon matrix may provide stable particles and reducing the formation of SEI-layers. Wang et al. (2013) [Ref 3] discloses composite particles made by pyrolyzing a mixture of nanoscaled silicon particles of 50 - 100 nm in a coal tar pitch followed by comminuting the pyrolyzed mixture to form a composite of Si-particles embedded in an amorphous carbon matrix (Si/$\alpha$C). Composites with 20 wt% Si were found to exhibit stable lithium storage ability for prolonged cycling. The composite anode delivered a capacity of 400.3 mAh/g with a high capacity retention of 71.3% after 1000 cycles. This was explained being due to the silicon nanoparticles being wrapped by amorphous SiOx and amorphous carbon in the (Si/$\alpha$C) composite which can supply sufficient conductivity and strong elasticity to suppress the stress resulting from the reaction of Si with Li during charge/discharge process.

Zhu et al. (2018) [Ref 4] reports a study investigating the correlations between key physical parameters and electrochemical properties of silicon particles when used in the anode of LIBs. The investigations included three samples of crystalline silicon particles denoted as S1, S2, and S3 which had a BET specific surface area of 41.4, 36.11, and 7.33 $m^2$/g, respectively. This corresponds to a D50 particle size of approx. 50, 100, and 150 nm. Each of the three particle samples were mixed with conductive carbon and sodium alginate binder and then applied on a copper conductor to form three anode samples with the S1, S2, and S3 particles, respectively. The amount of active material loading was ca. 0.5 mg/cm$^2$ in each anode sample. The anode samples were assembled in CR2032-type coin half-cells having the same electrolyte and cathode to investigate the effect of the silicon particle size of the anode on the electrochemical properties of the cells. The investigations show that all three cells with S1, S2, and S3, respectively had a reversible capacity of approximately 2500 mAh/g while the first cycle coulombic efficiencies (FCE) obtained with S1, S2, and S3 are 78.51%, 83.12% and 89.26%, respectively. The strong positive correlation between particle size and the first cycle efficiency is attributed to the difference of the specific area. The increased specific area of the Si anode with smaller particle size will inevitably aggravate the SEI formation reaction at the interface of the electrode and electrolyte, which results in a high irreversible capacity for the SEI formation. However, the rate capability of the Si anode was found to be enhanced by reducing the particle size. This is attributed to the short Li diffusion distance for the Si anode with smaller particle sizes. At a rate of 20C, the delivered capacities for S1, S2 and S3 were found to be 992.23, 323.17 and 233.43 mAh/g, respectively. Also, the cycling performance of the Si anode with different particle sizes were found to exhibit superior cycling stability with small particle sizes. After 300 cycles, the capacity retentions of S1, S2 and S3 are 96.12 %, 93.98 % and 76.73 %, respectively. This result was attributed to the large Si particles being more prone to pulverize and crack during the repeated charge-discharge cycles, especially when the particle size is larger than 150 nm, as reported in the literature.

Another factor which speaks for applying small silicon particles, reported by Rhenlund et al. (2017) [Ref 5], is diffusion controlled trapping of lithium in the electrodes. Their investigations show that during the cycling, small amounts of elemental lithium are trapped within the active electrode material due to a two-way diffusion causing lithium to move into the bulk of the active material, which makes the lithium extraction process significantly more time consuming. This Li trapping mechanism was demonstrated with silicon particles with a D50 of 50 nm.

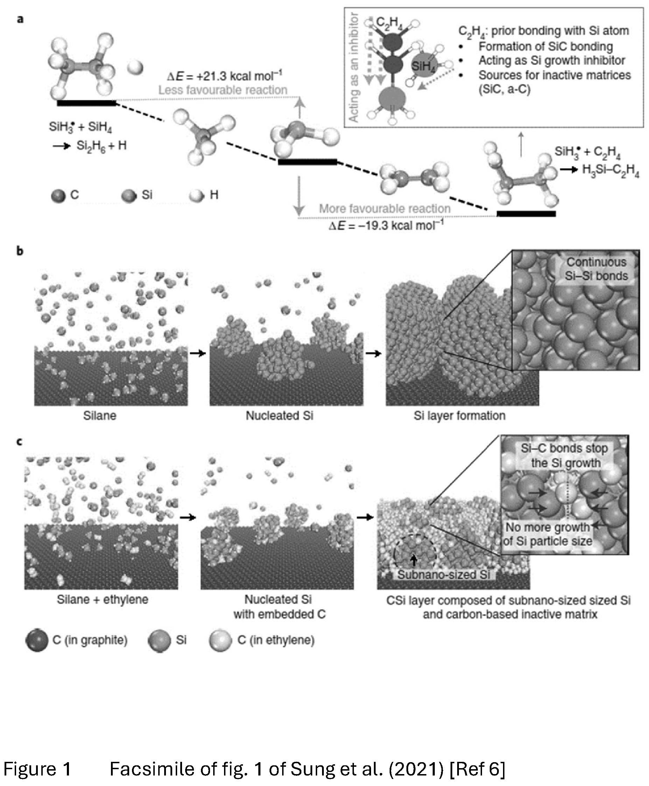

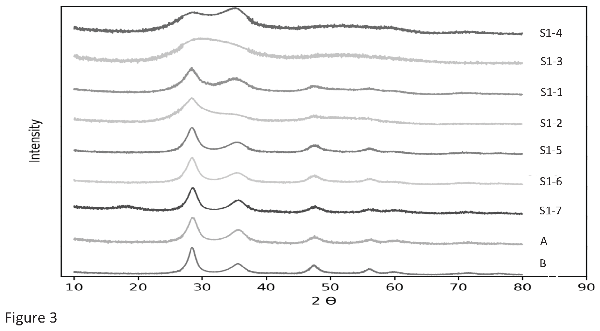

Sung et al. (2021) [Ref. 6] reports a study of the nucleation and growth mechanisms of a silicon and carbon containing film on a carbon substrate. The study included computer simulations based on density functional theory (DFT) and synthesis of films by thermal decomposition of a mixture of silane and ethylene gas at 475 °C at various silane to ethylene ratios ranging from only silane to a ratio of 10 : 7. The synthetized films was grown on either a planar amorphous carbon nanoparticle substrate or on spherical graphite particles and then coated with 5 wt% pitch based carbon and annealed at 900 °C. The films were made to have a thickness of 20-25 nm or 60-70 nm which took around 45 minutes or around 78 minutes to grow, respectively. The particle sizes of the graphite particles at which the films were deposited is not disclosed explicitly in the document but is seems from figure 3 of Sung et al. (2021) that the graphite particles where substantially spherical and had a diameter around 10 $\mu$m. The DFT calculations suggested that the carbon atoms released by the simultaneous decomposition of silane and ethylene function as crystal growth inhibitors for the silicon atoms by forming interposed layers of SiC and C between the silicon crystallites as shown schematically in figure 1 of Sung et al. (2021), replicated as figure 1 herein. The calculation showed further that the lower silane to ethylene ratio, the smaller the silicon crystallites in the film became. This result was confirmed by analysis of the synthesized films which found that the silicon crystallites in the film had a size ranging from 40 nm for a pure Si-film while silicon and carbon films had silicon crystallites of 3.8 nm for the film with smallest carbon content and 0.85 nm for the film with the highest carbon content. The film found to exhibit the best cycling stability, comparable to the cycling stability of graphite and thus acceptable for commercial use, where synthesized with a ratio silane to ethylene of 10 : 5 and consisted of silicon with 36.8 at% C (corresponds to 20.1 wt% C) and was found to exhibit a specific capacity of approx. 2000 mAh/g. The silicon crystallites in this film had an average particle size of 0.97 nm. The document further reports - as expected - that the specific capacity and FCE of the synthesized films decreased significantly with increasing carbon content in the films. However, the capacity did not fall with increased film thickness as would be expected. This result is described in Sung et al. as an indication that it is possible to increase the Si amount without any side effects of the growth of Si size, which has been a severe limitation for high specific capacity via a chemical vapour deposition process.

Document CN 115 881 931 A1 discloses a composite material for a secondary lithium battery as well as a preparation method and application of the novel composite material. The novel composite material comprises nano silicon and carbon atoms, and the carbon atoms are uniformly distributed in the nano silicon at an atomic level; carbon atoms and silicon atoms are combined to form amorphous Si-C bonds, and no SiC crystallization peak exists in X-ray diffraction spectroscopy (XRD); a solid nuclear magnetic resonance (NMR) detection 29Si NMR spectrum of the novel composite material shows that when the peak of silicon is located between - 70 ppm and - 130 ppm, a resonance peak of Si-C is located between 20 ppm and - 20 ppm, the resonance peak of Si-C and the area ratio of the silicon peak is (0.1, 5.0). The average particle size $D_{50}$ of the novel composite material is disclosed to be from 1 nm to 50 $\mu$m, and the mass of the carbon atoms accounts for 0.5 - 50 % of the mass of the novel composite material.

### Objective of the invention

The main objective of the invention is provision of silicon-based particles suited for being used as active material in the negative electrodes of secondary lithium ion batteries.

### Description of the invention

The present invention relates to silicon and carbon based particles suitable for use as an active material in the negative electrode of secondary lithium-ion batteries and may be considered being an improvement of the secondary particles described in European patent application No. EP22158616.7.

The particles described in EP22158616.7 are manufactured by injecting a homogeneous gas mixture comprising a first silicon containing precursor gas and a second carbon containing precursor gas at an atomic ratio Si : C in the range from near zero up to 10 into a reactor space holding a reaction temperature in the range of 500 to 1200 °C, most preferably 700 to 900 °C. The gas mixture of precursor gases may be preheated to a temperature in the range of less than 300 up to 500 °C. XRD analysis of the resulting particles finds that they are a composite of an amorphous silicon and carbon matrix having nanoscaled domains of amorphous silicon embedded therein. The particle sizes are in the range from 10 nm to 1 $\mu$m and the particles are described to have a Si : C ratio in the range of [0.2, 7], most preferably [1, 4]. This corresponds to a total total carbon content in the particles ranging from 12.5 to 83.3 at% (5.8 to 68.1 wt%).

In one example embodiment of EP22158616.7, the precursor gases were silane and ethene in a molar ratio Si : C of 1 : 1 preheated to about 400 °C. The gas mixture was injected into a reactor space containing nitrogen gas heated to a temperature at which the resultant gas mixture inside the reactor had a temperature of 810 °C. The residence time was less than 0.5 seconds. The resulting particles are described to be a composite of an amorphous silicon and carbon matrix of particle size in the range from 10 nm to 1 $\mu$m and which have a plurality of nanosized domains of amorphous silicon having an average crystallite size of 1.7 nm embedded therein. The overall carbon content of the particles was 35 atom%.

Table 1 of EP22158616.7 lists measured first cycle capacities and cyclabilities for samples of the particles having a total carbon content ranging from 14 to 35 atom%. The table shows that the particles with the highest carbon content (of 35 atom%) had the best cyclability of 621 cycles until 20 % decreased capacity but the poorest first cycle capacity of 1000 mAh/g, while the particles with the lowest total carbon content of 14 atom% had the poorest cyclability of only 36 cycles and the best first cycle capacity of 2200 mAh/g.

<u>Note on terminology</u>

In EP 22158616.7, there were applied three adjectives "primary", "secondary" and "tertiary" when referring to the particles. These adjectives refer to the level in the assembly of the particles, and not to any number of elements composing the particle. A primary particle is a particle that may later be embedded in a secondary particle but does not contain any particle other than itself. A secondary particle is a particle comprising a plurality of primary particles. A tertiary particle is a particle comprising a plurality of secondary particles.

Since the present application focuses only on the "secondary" level of assembly, it is for clarity reasons preferred herein to apply the terms "nanoscaled domain" instead of "primary particle" and "silicon-based composite particle" instead of "secondary particle". Thus, the present term "nanoscaled domain" corresponds to the "primary particle" of EP 22158616.7, and the present term "silicon-based composite particle" corresponds to the "secondary particle" of EP 22158616.7.

This does not, however, imply that the present nanoscaled domain is necessarily identical to the prior primary particle, and similar that the present silicon-based composite particle is necessarily identical to the prior secondary particle. There may in certain embodiments of the present particles be differences in chemical composition and/or structure as compared to the primary and secondary particles of EP 22158616.7.

The first aspect of the invention - the present silicon-based composite particles

One essential distinction between the present silicon-based particles and the particles of EP 22158616.7 is that the latter particles should have an amorphous structure since this was believed to increase the cyclability of the particles when applied as active electrode material of secondary lithium ion batteries (LIBs). The present particles are however subject to a post-production annealing which at least partly crystallises both the nanoscale silicon domains and the silicon and carbon containing first matrix of the particles since this treatment has shown to increase the electrochemical properties of the particles.

The present silicon-based composite particles are, as the prior secondary particles of EP 22158616.7, believed to be composite particles where each particles has a "raisins in a bun dough"-resembling structure with a plurality of tiny nanoscaled silicon domains (the "raisins") being embedded in the bulk material of silicon and carbon (the "bun dough"). The term "composite particle" as used herein refers thus to the plurality of nanoscaled silicon domains, each constituting a first chemical phase, being distributed in the bulk material comprising silicon and carbon, which constitutes at least one second chemical phase of the particle. While the local variations in the silicon and carbon in the matrix may vary with production history and subsequent annealing, the nanoscaled silicon domains are expected to be the main contributors to the lithium storage capacity.

Experimental experience and testing of the particle formation indicates that the reaction temperature may alter the reaction kinetics and mechanisms during growth of the silicon-based composite particles. This is supported by e.g. the temperature dependency of the silanes and of hydrocarbons, more precisely the fact that Si-H bond vibrations of the silanes are activated at lower temperature than the C-H bonds of hydrocarbons.

Without being bound by theory it is believed that the early stage of homogeneous nucleation, where the nanoscaled domains of silicon are formed, results in liquid-like or semisolid droplets that are somewhat fluid at the reaction temperature. When carbon-containing precursor gas becomes energetically available for the reaction, it is assumed to form a layer of amorphous SiC and/or C around and be part of these droplets and thereby prevent the silicon nanoscaled domains to combine and/or grow to larger silicon domains. The silicon domains are forced by the carbon layers to remain small in the nanoscale, such as shown in Sung el al. (2021) [Ref 6].

These droplets of liquid or semiliquid silicon having a carbon layer then experience two competing processes - a droplet agglomeration (driven by Brownian motion) and a solidification (gradual hydrogen removal from the Si or C precursor molecules). Droplets that meet before solidification (of at least one of the droplets) will agglomerate into a near spherical silicon-based composite particle. The agglomeration process is only weakly dependent on temperature, but the droplet formation, gas consumption and solidification processes (hydrogen removal) are all exponential functions of temperature.

Thus, at relatively high reaction temperatures above 700 - 750 °C, it is believed that initially formed droplets solidify to nanoscale silicon domains and release hydrogen so rapidly that they only have time to a limited agglomeration before the agglomerates become less fluid and particle growth becomes limited. Also, the high temperature can initiate a high number of particles, so there is little gas left around the particles to continue particle growth after the initial droplet formation. The CVD growth of carbon and silicon on the already formed droplets is also occurring much faster at higher temperatures. This is believed to be why it is observed that particles made at high temperatures (of at least 700 - 750 °C) and otherwise identical conditions tend to produce small particles down to a few tens of nm in diameter and higher carbon contents than particles formed at decomposition temperatures below 700 °C given the same gas mixture. The "bun dough" in this case (with high temperature) comprises a silicon and carbon alloy.

The present particles are however to be synthesised at relatively low decomposition temperatures, at 450 to 700 °C. At these temperatures, it is believed that the solidification of the droplets is delayed allowing time for significantly more nanoscale silicon domains to agglomerate into relatively large and more or less spherical agglomerates in the microscale. At the same time, the gas consumption rate is also reduced, so a longer residence time is required to obtain commercially relevant precursor conversion rates. If the reaction temperature and time can both be controlled, it is thereby possible to grow relatively large particles and control the particle size. The silicon-based composite particle is in this case believed to mainly consist of densely packed "raisins" of nanoscaled silicon domains having an amorphous SiC and/or C layer along the boundaries in-between the "raisins". The "dough" (bulk material) comprises in this case an amorphous $SiC_x$ and/or a few atoms thin, amorphous C layer lying at the boundary in-between silicon domains of the densely packed agglomerate of nanoscaled silicon domains. This provides a relatively high volumetric silicon density in the particle mass in the form of a relatively large plurality of nanoscaled silicon domains. This structure is believed to be somewhat similar to the structure described by the silicon and carbon containing film disclosed in Sung et al. (2021) [Ref 6] to be laid onto a micrometre sized carbon particle, however with the essential distinction that the present particles has this composition throughout the entire particle from its core to the outer surface.

Thus, without being bound by theory, the bulk material comprising silicon and carbon is believed (before annealing) to be a matrix/network of amorphous $SiC_x$ surrounding the nanoscaled silicon domains. This matrix/network of amorphous $SiC_x$ may include Si atoms covalently bonded to both C and Si atoms, as well as C atoms bonded to both C and Si atoms. Most of the carbon atoms in the bulk material are expected to be bonded to at least one silicon atom. This clearly differentiates the product from prior art powders produced by the deposition of silicon particles into a porous carbon matrix. After annealing, said amorphous $SiC_x$ may be partially crystallized into nanoscaled SiC domains in addition to the nanoscaled silicon domains. The annealing according to the invention is also expected to cause some solid-state diffusion effects in the matrix/network of the bulk material which may form C, Si, and $SiC_x$ phases/domains in the matrix/network. Thus, the term "a first matrix comprising nanoscale silicon carbide domains" as used herein encompasses C, Si, and $SiC_x$ phases/domains in the matrix/network.

Particles that meet after solidification remain separate particles. Particles that meet at the intermediate stage between 'fluid' and solid, can agglomerate together into large clusters of small particles, where laser diffraction or DLS may give a large value, while BET indicates a much smaller particle size.

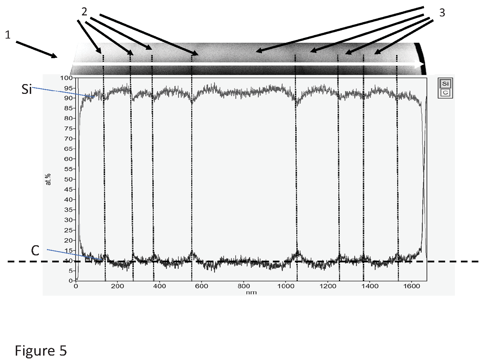

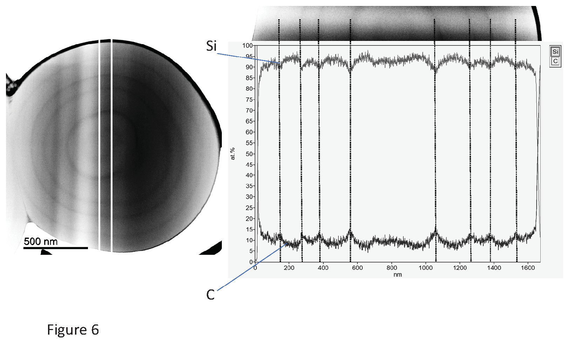

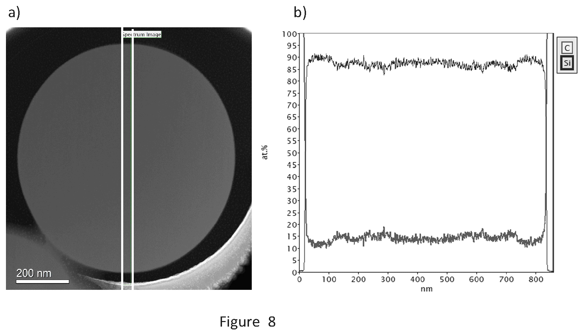

One characteristic property of the present particles is that they have a substantially homogeneous carbon concentration from the particle centre out to the outer surface of the particle, i.e. there is no, or at least no significant increase in the carbon concentration toward the particle surface. See e.g. figures 5 to 8 and the discussion of their content below.

Without being bound by theory, it can be speculated that the preheating of the gases plays an important role here. By reducing the need for heating the gas in the reaction chamber, the reactions are more similar in all fractions of the gas, and the gas is thus consumed under more constant conditions. The preheating ensures rapid heating even of the coldest gas fractions, giving a more uniform gas ratio during the reactions.

An advantage of applying condensation and chemical vapour deposition of a mixture of a silicon containing precursor gas and a carbon containing precursor gas in a protected atmosphere is that the method gives excellent control with which elements being introduced into the reactor and thus which elements that will be present in the produced particles. For example, if the silicon-containing precursor gas is a silane and the carbon-containing precursor gas is a hydrocarbon, it will mainly be the elements hydrogen, carbon, silicon and usually an inert gas element (nitrogen, argon, etc.) and only very minor amounts of oxygen (remains of air) inside the reactor.

Furthermore, when the particle according to the invention are, in one embodiment, made by condensation and chemical vapour deposition of hydrogen-containing precursor gases, the resulting particles may contain significant amounts of hydrogen in the bulk material, primarily bonded to C atoms.

Theoretically, the particle can be expected to become solid when the hydrogen content falls to < 1 atom per silicon or carbon atom. The hydrogen bonded to silicon is likely to leave at lower temperature than that bonded to carbon, so a hydrogen content < 1 atom per carbon should be easily achievable. The particles may in one embodiment contain up to 30 atom% hydrogen or less before the post-production annealing. The post-production annealing will however drive off some or most of the hydrogen content such that the term "unintentional impurities" as used herein may, in an embodiment, encompass less than 20 atom% H, more preferably less than 15 atom%, more preferably less than 10 atom%, more preferably less than 5 atom%, and most preferably less than 1 atom%.

Ideally, there should be no oxygen in the particles because the presence of oxygen causes loss of (irreversible bonding) of lithium atoms and reduces the first cycle efficiency of a LIB applying the particles as the active material in the negative electrode. However, in the practical life, it may be difficult to shield the particles from coming into any contact with ambient oxygen such that the term "unintentional impurities" as used herein may in an embodiment encompass as much as 4 atom% oxygen but is preferably less than 0.5 atom%. Thus, in one embodiment, the total oxygen content of the particle according to the invention is less than 4 atom%, preferably less than 3 atom%, more preferably less than 2 atom%, more preferably less than 1 atom%, and most preferably less than 0.5 atom%.

Thus, the produced particles will in one embodiment mainly contain silicon and carbon, and may contain from less than 1 atom% up to 20 atom% hydrogen, oxygen from less than 0.5 atom% up to 4 atom% oxygen and eventual traces of unavoidable impurities.

When measuring a practical product, however, one will frequently measure 0.3 - 4 wt% oxygen, but this is usually due to air exposure occurring after the production is completed, for example in the preparation of the characterization

sample.

<u>Nanoscaled domains</u>

The nanoscale silicon domains of the present particles are believed to be substantially pure silicon phases. However, due to the presence of carbon in the precursor gas mixture, it may be that some carbon may enter these nanoscale silicon domains, however probably in minor amounts. Determination of crystal lattice constants by XRD analysis (after a rapid crystallization at e.g. 900 °C for 30 min) matches the crystal lattice constants of pure silicon. Also, based on experience from for example carbon gettering in solar silicon, the inventors are not aware of reports of high carbon mobility at these temperatures. This is an indication that the carbon content, if present at all in the nanosized domains, is very low. XRD analysis of the particles before crystallization matches that of amorphous silicon fairly well, while electron energy loss spectroscopy (EELS), averaging over slightly larger areas that contain both nanosized domains and the binding matrix, documents the presence of the carbon. This may indicate that there are some carbon present in the nanosized domains. Furthermore, since the precursor gases also contain hydrogen, the particles may contain some hydrogen due to incomplete dissociation of the precursor gases.

Thus, the term "nanoscale silicon domains" as used herein refers to nanoscaled silicon particles which may contain minor amounts of carbon and/or hydrogen. The silicon content is believed to be at least 90 atom% and may be as high as 98 to 100 atom%, based on the mass of the nanoscale silicon domains.

An advantage of the nanoscale silicon domains are believed to be that they increase the lithiation capacity without compromising the cyclability when being applied as the active material in a secondary lithium ion battery. The lithiation capacity is increased by the silicon domains providing a high capacity storage volume for lithium atoms and the cyclability is increased due to nanoscaled silicon being more robust and endures the volumetric fluctuations associated with lithiation/delithiation cycles much better than larger silicon domains. Furthermore, since the lithiation of the silicon domains implies a substantial opening/breaking of Si-Si bonds, it is also regarded as being highly attractive that the Si-C and C-C bonds remain intact in the lithiated state and thereby keep the particle structure in place.

X-ray diffraction (XRD) (when XRD is applied on particulate material it may also be denoted as powder X-ray diffraction (PXD) or X-ray powder diffraction (XPD) in the literature) give different diffraction patterns for crystalline and amorphous materials, respectively. As used herein, the abbreviations XRD and XPD may be used interchangeably since the X-ray diffraction analysis is applied on the particles according to the invention. Crystalline materials, due to their high degree of ordering and symmetry in their atomic structure, tend to give sharp peaks, Bragg peaks, in XRD-measurements. For crystalline silicon materials, the XRD-analysis typically gives sharp peaks at 28.4°, 47.4°, and at 56.1° in the measured diffraction patterns measured with CuK$\alpha$ radiation. Silicon carbide (SiC) typically give sharp Bragg peaks at 35.6°, 60.0,° and at 71.7°. In comparison, amorphous materials which lack the long-range order characteristic of crystalline atomic structures, typically gives broader peaks being significantly more "smeared-out" in the measured diffraction patterns. Amorphous silicon typically gives rounded peaks at 28° and 52°. These rounded peaks can be fitted with a Gaussian curve to get a well-defined value for the maximum and the width of the peak. Such a fit can be performed by any skilled XRD operator. For such rounded peaks, the higher angle equivalents can be blurred, and the current application therefore focuses on the features in the lowest angle/highest amplitude peaks for each material.

Also, the "sharpness" of a peak may be applied to distinguish between crystalline and amorphous materials. The typical Full Width at Half Maximum (FWHM) of an XRD-peak for crystalline silicon is typically less than 2° - 4°, while the FHWM for amorphous silicon is typically larger than 4° when measured with a diffractometer applying unmonochromated CuK$\alpha$ radiation and using a Gaussian fit. Full width at half maximum (FWHM) is the width of the peak curve measured between those points on the $y$-axis which are half the maximum amplitude of the peak curve (after subtracting the background signal and/or signal from the sample holder). Samples containing both amorphous and crystalline silicon will obtain a diffraction pattern in XRD-analysis showing both sharp Bragg-peaks typical of the crystalline phase and the broader, more Gaussian peaks typical for the amorphous phase. The diffraction pattern may be applied to estimate the crystalline fraction of the sample from the ratio of area under the Bragg peak(s) above an amorphous broad peak and the total area of the broad peak and the Bragg peaks. A linear background should be subtracted from the calculation prior to the calculations.

The angles and angle tolerances in the XRD analysis as applied herein refer to use of a diffractometer applying unmonochromated CuK$\alpha$ radiation since the radiation has high intensity and a wavelength of 1.5406 Å which corresponds well with the interatomic distances in crystalline solids making the analysis sensitive to presence of crystalline phases in the silicon particles. XRD analysis applying diffractometers with CuK$\alpha$ radiation is for the same reason the natural choice and thus the most widely used method in XRD analysis and is well known and mastered by the skilled person. Other diffractometers apply radiation with other wavelengths which may give different angles and angle tolerances. However, the skilled person will know how to convert these values from one radiation source to another.

Furthermore, crystalline nanodomains of silicon (less than a few hundred nanometres) gives a characteristic peak broadening of Bragg peaks obtained by X-ray powder diffraction (XPD). This peak broadening may be applied to determine the average diameter of the nanosized domains (embedded in the silicon-based composite particles) by e.g. a Rietveld refinement of the XPD data from an XPD-analysis of the silicon-based composite particles in a single-modal or multimodal distribution. Since the present particles are subject to a post-production annealing which at least partly crystallizes the nanoscale silicon domains, the Rietveld refinement of the XPD data should preferably be made after the annealing.

Rietveld analysis of XPD data to determine average particle sizes is well known and mastered by the person skilled in the art. An example of such analysis may e.g. involve fitting calculated XPD data from a model of crystalline Si to experimental data obtained by a XPD measurement of a sample of the silicon-based composite particles with the least-squares method; a so-called Rietveld refinement. The Rietveld refinement can be performed with freely available software such as GSAS-II [Ref 7] or commercial software such as Topas [Ref 8]. The instrumental contribution to the width of the Bragg peaks should either be calculated from the geometry of the instrument ("fundamental parameters approach" [Ref 9]) or be described by a Thomson-Cox-Hastings pseudo-Voigt function [Ref 10] determined experimentally from a highly crystalline standard material such as NIST SRM 640f silicon. The instrumental contribution to Bragg peaks is kept fixed during the Rietveld refinement. All additional broadening of the observed Bragg peaks is assumed to be due to small crystallite size and to have Lorentzian shape. This crystallite size broadening is modelled by refining an additional contribution, $\beta$, to the calculated Bragg peak widths which varies with the scattering angle as:

$$\beta = \frac{\lambda}{\tau * \cos(\Theta)} \frac{360}{\pi^2}$$

where $\lambda$ is the X-ray wavelength used in the XPD measurement. $\beta$ is the additional full-width-at-half-maximum (FWHM) of a Bragg peak at scattering angle $2\theta$, i.e. the width in degrees halfway between the top and the bottom of the peak. The value of $\tau$, the average crystallite diameter/size, is allowed to vary freely during the Rietveld refinement and converge to the value that gives the best agreement between the experimental and calculated XPD data.

Without being bound by theory, it is believed that the nanoscale SiC crystallites formed by the post-production annealing of the particles according to the invention are formed by solid state diffusion which rearranges Si and C atoms in the molecular structure of first matrix laying in-between the nanoscale silicon domains and forms the SiC-domains which are initially amorphous and which gradually crystallizes, at least partly, during the post-production annealing. Due to the relatively high temperature and duration of the annealing, most of the eventual hydrogen content remaining from the particle synthesis is expected to be driven off and outgassed such that the chemical composition of the SiC-crystallites are most likely close to 100 % pure SiC. The sizes of the nanoscale SiC domains are found to be in the same order as the nanoscale silicon domains.

Annealing

Thus, as given above, the structure of the present composite particles of a plurality of nanoscale silicon domains agglomerated together and being separated from each other by a few atoms thick layer comprising silicon and carbon is believed to be somewhat similar to the structure described by the silicon and carbon containing film disclosed in Sung el al. (2021) [Ref 6] to be laid onto a micrometre sized carbon particle, however with the essential distinction that the present particles has this composition throughout the entire particle from its core to the outer surface while the particles of Sung et al. consists mainly of a micrometre sized graphite particle having a 50 - 70 nm thick film of this composite structure.

However, there is probably a further structural difference between the material of the film of Sung et al. and the material of the present particles. This is believed to be due to somewhat different manufacturing processes. The present particles are made by free-space condensation and chemical vapour deposition (CVD) of silicon and carbon containing precursor gases at 450 to 700 °C, while the particles of Sung et al. (2021) are made by chemical vapour deposition of silane and ethylene gases onto an amorphous substrate/particle of amorphous carbon at 450 °C.

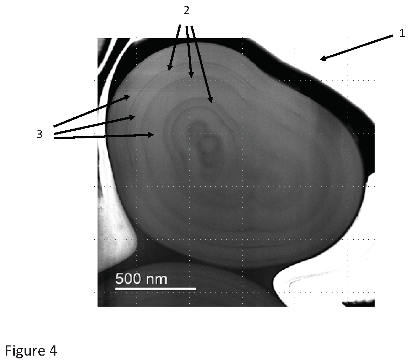

The composite material of the film of Sung et al. is described to be an agglomerate of nanoscale silicon domains having a carbon and silicon carbide layer at the boundaries between the nanoscale silicon domains. See e.g. facsimile of figure 1 of Sung at al. replicated herein as figure 1. Both the silicon and silicon carbide phases of this material are shown to contain crystallites as evidenced by the XRD-curves given in figure 4a) of Sung et al. which contains one rather "pointy" peak at approx. 28° indicating at least partly crystallisation of the silicon domains and one peak at approx. 36° which indicates crystallites of SiC.

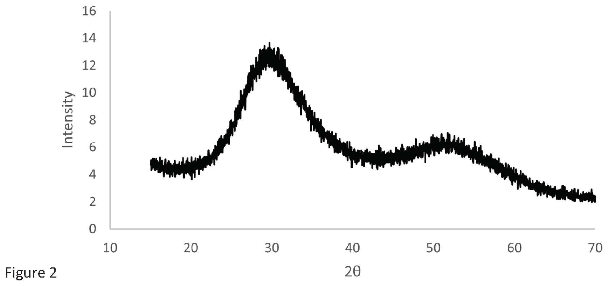

In comparison, the present particles are substantially amorphous when they exit the decomposition chamber as evidenced by the XRD diagram of figure 2 taken for a sample of particles, herein labelled as S1-1, and which is described in detail in the "Verification of the invention" section below, before being subject to the post-production annealing which characterises the particles of the present invention. The XRD-curve of figure 2 displays a much wider peak at approx. 30° which is an indication of amorphous silicon. The curve contains no sign of a peak at approx. 36° and indicates thus no measurable amount of crystalline SiC. There is no sign in this curve of crystallites of either Si or SiC, as is expected from the content of e.g. the inventors earlier work disclosed in EP22158616.7.

An essential part of the particles according to the invention is that they are subject to a post-production annealing which induces structural changes in the "pristine" particles. This may be seen from figure 3 which displays XRD-curves for 7 samples of the example embodiment labelled S1-1 to S1-7 having been subject to a post-production annealing from the ambient room temperature up to a annealing temperature in the range from 850 to 1000 °C with a ramp rate of 1 or 4 °C/min. The annealing was terminated when reaching the annealing temperature. Table 1 summarises the annealing conditions and the obtained first cycle efficiency and first cycle capacity of the samples. The XRD-curves marked with "A" and "B" in the figure are from samples from the same embodiment S1 heat treated at 1000 and 1100 °C, respectively. The electrochemical properties of these two samples are not investigated since the results of the gentler annealing indicate that these temperatures are too harsh.

Table 1 Comparison of electrochemical properties of samples exposed to different annealing

| Sample | Ramp rate [°C/min] | Annealing temperature [°C] | First cycle Efficiency [%] | First cycle capacity [mAh/g] |
|---|---|---|---|---|
| Reference* | amorphous | none | 63 | 844 |
| S1-1 | 1 | 900 | 86 | 2065 |
| S1-2 | 4 | 900 | 80 | 1180 |
| S1-3 | 4 | 875 | 80 | 1894 |
| S1-4 | 1 | 850 | 79 | 1744 |
| S1-5 | 1 | 950 | 78 | 2188 |
| S1-6 | 1 | 950 | 73 | 2168 |
| S1-7 | 1 | 1000 | 72 | 1933 |
| * The reference is a S1-1 particle with no post-production annealing | | | | |

Table 2 XRD analysis results of the samples of table 1

| Sample | Crystallite size Si [nm] | Crystallite size SiC [nm] | FWHM Si peak at 28° [°] | FWHM SiC peak at 36° [°] |
|---|---|---|---|---|
| Reference* | amorphous | amorphous | - | - |
| S1-1 | 2.7 | 1.7 | 3.01 | 4.71 |
| S1-2 | 1.9 | 1.5 | 4.29 | 5.58 |
| S1-3 | 1.2 | 1.2 | 7.06 | 6.98 |
| S1-4 | 1.3 | 1.7 | 6.36 | 4.75 |
| S1-5 | 3.9 | 2.2 | 2.07 | 3.67 |
| S1-6 | 4.0 | 2.3 | 2.02 | 3.63 |
| S1-7 | 4.3 | 2.9 | 1.88 | 2.82 |
| * The reference is a S1-1 particle with no post-production annealing. treatment. It does therefore not yet have the two well-defined peaks, rather it has a very rounded peak near 30°. | | | | |

The XRD-curves in figure 3 show that the annealing from 850 °C and above causes a gradual structure change in the particles by the broad peak at approx. 30 ° begins to gradually form a narrower peak shifting position to approx. 28°, an indication that the silicon domains in the particles gradually transforms from amorphous to crystalline. The XRD-curves show further that there is gradually developed a peak at approx. 36° indicating the formation of crystallites of SiC.

The First Cycle Efficiencies (FCE) and first cycle capacities given in Table 1 indicates that there is an optimum parameter window for the post-production annealing. The S1 embodiment of the particles gave the best FCE and first cycle capacity when heat treated up to 900 °C with a ramp rate of 1 °C/min. Also, if annealing is continued to very high temperatures, it must be expected that the nano-crystallites gradually form larger and larger domains, losing the stabilizing effect of the Si-C bonds near the Si nanocrystals. Without being bound by theory, it can be assumed that only the outer C atoms in the SiC crystals truly have a stabilizing function, so maintaining many small SiC crystallites will be better than having the same amount of SiC in larger crystallites.

Table 2 show the crystallite sizes of the Si and SiC crystallites for the samples S1-1 to S1-6 as determined by a Rietveld analysis and the Full Width at Half Maximum (FWHM) for the Si peak at approx. 28° and the SiC peak at approx. 36°. The crystallite sizes of the present particles are in the range from 1.2 to 2.9 nm. This is also an indication that the structure of the present particles is distinct over the structure of the film material of Sung et al which reports sub-nano crystallites of SiC.

Furthermore, the above results indicates that the annealing may advantageously be terminated before the particles become fully crystallized but are a mixture nanoscale amorphous and crystalline Si and SiC domains. Without being bound by theory, this is believed to be due to the expelling/outgassing of hydrogen during the particle growth by CVD may leave dangling bonds within the material, which is believed both to lead to poor conductivity (which will result in a low capacity measurement) and to low FCE (due to the dangling bonds being potential traps for lithium atoms). The post-production annealing is further believed to cause solid state diffusion in the material enabling Si atoms of the amorphous silicon domains to shift positions and satisfy dangling bonds when being crystallized, and likewise that both Si and C may move and satisfy dangling bonds in the boundary regions between the agglomerated silicon domains. The latter will form SiC. Further annealing after the optimum may lead to excessive crystal growth and SiC formation. Both are known to be negative for battery purposes.

A further mechanism may be that the thin SiC layers formed initially creates blocking 'fences' in the material. The annealing possibly makes these dense fences reorganize into a pillar or mesh structure, opening pathways for the Lithium between the SiC nanodomains. Finally, a crystal structure may give lower activation energies for the Li diffusion, as the initial and final states involved in a jump are more likely to have the same energy. These two last phenomena can be correlated to the apparent improvement of the kinetics of the lithium transport.

Anyhow, whatever the structure of the heat treated particles may be or why they react as they do, it is observed that a post-production annealing up to a temperature in the range of from 800 to 1100 °C with a ramp rate from 1 to 5 minutes/°C may significantly increase the electrochemical properties of the particles. XRD analyses indicates that the resulting particles become partly crystallized and exhibits a Full Width at Half Maximum (FWHM) for the Si peak at approx. 28° in the range of 0.5° - 8° and a Full Width at Half Maximum (FWHM) for the SiC peak at approx. 36° in the range of 1° to 10°.

Particles exiting the decomposition compartment of the particle forming reactor should advantageously be stabilised and prevented from eventual further post-process particle growth due to e.g. condensation of residues of precursor gases exiting together with the particles. This is obtained by the feature of cooling the particles in-between the particle formation and the annealing.

A first consideration in this regard, known to the person skilled in the art, is that this objective is achieved by cooling the particles to a temperature being equal to or lower than the preheating temperature of the precursor gases since at those temperatures, there is no or only insignificant gas condensation reactions taking place, which usually means that the particles should be cooled to a temperature of less than 500 °C.

Another consideration, also known to the skilled person, is that the that the reaction between oxygen and silicon taking place on the surface of ultrafine silicon particles if exposed to ambient air is highly exothermic and may lead to an uncontrollable thermal runaway oxidation of the particles mass. This speaks for cooling the particles down to the ambient air temperature to make them more robust towards such thermal runaway oxidation.

A third consideration known to the skilled person is that the when the objective of the present post-particle production is to partly crystallise the amorphous nanoscale silicon and/or the amorphous nanoscale SiC domains of the silicon based composite particles, that this objective requires an annealing temperature of at least 700 °C.

A skilled person applying these three well-known considerations will therefore read and understand the term "cooling the particles to room temperature" as used herein, to encompass cooling the particles to any temperature from the colloquially understanding of the term of around 25 °C up to a temperature of 500 °C, depending on whether the formed particles are subject to ambient oxygen after formation. Thus, in one embodiment of the invention, the particles extracted from the decomposition chamber are cooled to a temperature in the range from 25 to 500 °C, preferably from 100 to 450 °, more preferably from 250 to 400 °C, and most preferably from 300 to 350 °C.

Furthermore, the ideal annealing temperature may in some embodiments be dependent on the carbon amount of the silicon based composite particles and possibly also the particle size. In particles with more carbon, it may be necessary to go to a higher temperature, or longer annealing times, to achieve the optimal crystallite size, but the carbon amount still ensures small nanodomains. In particles with lower carbon amount, there is a larger risk of forming excessively large silicon domains, and the maximum temperature may advantageously be relatively low as compared to the former case with high carbon contents. It is within the ordinary skills of a person skilled in the art to tune the post-production annealing temperature.

In a first aspect the invention relates to silicon-based composite particles, wherein the silicon-based particles have a total chemical composition comprising:

- a total content of carbon, $C_{total}$ being from 5 to 50 atom%, based on the total mass of the silicon-based composite particles, and
- the rest being silicon and unintentional impurities, characterised in that
- the silicon-based particles are made of a bulk material,
- the bulk material comprises a plurality of nanoscaled silicon domains embedded in a first matrix comprising nanoscale silicon carbide domains, and
- the particles, when subjected to XRD analysis applying unmonochromated CuK$\alpha$ radiation, exhibit one peak at around 28° having a Full Width at Half Maximum (FWHM) in the range from 0.5° to 8° and one peak around 36° having a FWHM in the range from 1° to 10°.

The term "total chemical composition comprising an element" and/or the term "in a total amount of an element" as used herein encompasses the entire content of that element in all constituents and parts of the present silicon-based composite particle from its core centre to its surface. An eventual contents of said element in a surface coating laid onto the particle is excluded from the total content of the particle. Thus, as used herein, the term "total content of an element" does not include an eventual "presence of this element in a surface coating deposited onto the particle, but is confined to the amount of said element being present in the bulk material of the silicon-based composite particles.

The determination of the total content of an element, for example silicon, carbon, hydrogen, and/or oxygen in the particles may be obtained by e.g. atomic absorption (AA), inductively coupled plasma-mass spectrometry ICP-MS (ICP-MS), ICP-optical emission spectroscopy (ICP-OES), or X-ray fluorescence analysis (XRF). These are well known techniques mastered by persons skilled in the art. The total carbon content of a particle may also be determined by combusting a sample of the particles and measuring/determining the amount of carbon dioxide being formed. The total carbon content of a secondary particle may also be determined by combusting a sample of the particles and measuring/determining the amount of carbon dioxide being formed. For coated particles, the determination of the elemental composition of the particle inside the coating can be determined by using a Focussed Ion Beam Scanning Electron Microscopy or Tunnelling Electron Microscopy (FIB-SEM or FIB/TEM) cross section combined with Electron dispersive Spectroscopy (EDS) and/or Electron Energy Loss Spectroscopy (EELS) elemental analysis techniques. These are also well known techniques mastered by persons skilled in the art. The hydrogen content can be estimated by pyrolyzing the sample under inert atmosphere and measuring the emitted hydrogen gas with a mass spectrometer. These are well known techniques mastered by persons skilled in the art.

The term "bulk" as used herein, is applied in the meaning "most of something". I.e., the "bulk material" of the claimed particle is the major constituent of the particle mass.

The term "nanosized silicon domains" as used herein refers to a plurality of silicon domains agglomerated into a relatively large and more or less spherical domain of agglomerates and where the silicon domains are at least partly encapsulated in an interposed layer of a second material phase comprising silicon and carbon, and probably also SiC. The nanosized silicon domains may be amorphous, partly crystallised (mixture of amorphous and crystalline Si) and/or completely crystallised.

In one embodiment, the average diameter of the nanosized silicon domains may advantageously be in the range from 0.5 to 10 nm, preferably from 1 to 8 nm, more preferably from 2 to 7 nm, more preferably from 3 to 6 nm, more preferably from 4 to 5 nm, more preferably from 0.75 to 7.5 nm, more preferably from 1 to 5 nm, more preferably from 1.25 to 4 nm, more preferably from 1.5 to 3 nm, more preferably from 1.75 to 2.75 nm, and most preferably from 2 to 2.5 nm as determined by Rietveld refinement of X-ray Powder diffraction (XPD) data, if necessary, after exposing the silicon-based composite particles to a annealing which crystallizes the nanosized silicon domains therein.

The term "first matrix" as used herein refers to the interposed layer(s) of a second material phase comprising silicon and carbon, and probably also SiC.

The term "nanosized silicon carbide domains" as used herein refers to a plurality of SiC domains formed in the first matrix during the post-production annealing, and maybe also during the particle synthesis.

In one embodiment, the average diameter of the nanosized silicon carbide domains may advantageously be in the range from 0.5 to 10 nm, preferably from 1 to 8 nm, more preferably from 2 to 7 nm, more preferably from 3 to 6 nm, and most preferably from 4 to 5 nm as determined by Rietveld refinement of X-ray Powder diffraction (XPD) data, if necessary, after exposing the silicon-based composite particles to a annealing which crystallizes the nanosized silicon carbide domains therein.

In one embodiment, the total chemical composition of the silicon-based composite particle may advantageously comprise:

- a total content of carbon, $C_{total}$ being from 7 to 45 atom%, preferably from 10 to 40 atom%, more preferably from 15 to 35 atom%, more preferably from 20 to 30 atom%, and most preferably from 23 to 27 atom%, based on the total mass of the silicon-based composite particles, and

- the rest being silicon and unintentional impurities.

Higher carbon contents give higher stability advantageous for some user applications of the particles while lower carbon contents give higher capacity - as preferred for other user applications.

In one embodiment, the particles of the invention, when subjected to XRD analysis applying unmonochromated CuK$\alpha$ radiation, exhibit:

- one peak at around 28° having a Full Width at Half Maximum (FWHM) in the range from 0.8° to 7.5°, preferably from 1.2° to 7.0°, more preferably from 1.4° to 6.5°, more preferably from 1.7° to 6.0°, more preferably from 2.0° to 5.5°, more preferably from 2.3° to 5.0°, more preferably from 2.6° to 4.5°, and most preferably from 2.9° to 4.0°, and
- one peak at around 36° having a Full Width at Half Maximum (FWHM) in the range from 1.25° to 9.0°, preferably from 1.5° to 8.0°, more preferably from 1.75° to 7.0°, more preferably from 2.0° to 6.0°, more preferably from 2.5° to 5.0°, and most preferably from 3.0° to 4.0°.

Narrow particle size distribution

In one embodiment, the particle according to the invention may advantageously have a median volume-weighted diameter, $D_{50}$, in the range from 1 to 9 $\mu$m, and a volume weighted diameter ratio $D_{90}/D_{10}$ in the range from 1 to 9, and wherein the $D_{10}$, $D_{50}$, and $D_{90}$ volume weighted particle diameters are determined by laser diffraction analysis according to standard ISO 13320:2020.

In one embodiment, the silicon-based composite particles of the invention may advantageously have a median volume-weighted diameter, $D_{50}$, from 1.1 to 8 $\mu$m, more preferably from 1.2 to 7 $\mu$m, more preferably from 1.6 to 6 $\mu$m, and most preferably from 2.0 to 5 $\mu$m, as determined by laser diffraction analysis according to the standard ISO 13320:2020.

Laser diffraction analysis may also be applied to provide the volume-weighted diameter particle size distribution $D_{10}$ and $D_{90}$ of the silicon-based composite particles and be applied to determine the $D_{90}/D_{10}$ ratios.

In one embodiment, the silicon-based composite particles of the invention may advantageously have a $D_{90}/D_{10}$ ratio in the range from 1.5 to 8, preferably from 2 to 7, more preferably from 2 to 6, and most preferably from 3 to 5, as determined by standard ISO 13320:2020.

The embodiment of the particles according to the invention having the relatively large particle size of a median volume-weighted diameter, $D_{50}$, in the range from 1 to 9 $\mu$m, has the advantage of enabling a relatively high first cycle efficiency. After fabrication and assembling of a secondary lithium ion battery it needs to go through a first charge/-discharge cycle (often labelled as the formation). During the formation, lithium ions are released during the charging stage by the active material of the positive electrode, migrating through the electrolyte and are absorbed by the active material of the negative electrode. Then, during the discharge state, the opposite is taking place. However, it turns out that there are less lithium ions returning to the positive electrode during the discharging stage than which left the positive electrode during the charging stage. This loss of (available) lithium in the battery during the first cycle is known to increase linearly with the total surface area of the active material, and may typically, depending on type of electrode being applied, constitute a reduction in the energy storing capacity of the battery of between 2 and 20 %.

Furthermore, the embodiment of the particles according to the invention having the relative narrow particle size distribution of a volume weighted diameter ratio $D_{90}/D_{10}$ in the range from 1 to 9, has the advantage, especially when the $D_{50}$ diameter is relatively high, that there will be relatively few "oversized" particles, i.e. that the $D_{99}$ fraction of particles does not become so large to significantly reduce the capacity and cyclability of the material. The larger the particles become, the longer the diffusion distances become for the lithium atoms moving in and out of the particles, while the current density over the surface increases and thereby adds charge transfer resistance, both mechanisms increasing the risk of lithium being diffusively trapped inside the particles. Too large particles are thus partially inactive as active material. The largest particles also risk having too large absolute expansion, which may lead to delamination or other damages to the cell. Furthermore, a narrow size distribution also means that there are few very small particles, i.e. particles with much higher surface area per weight that thereby contribute to lithium losses during the formation cycles.

Thus, the relatively low $D_{90}/D_{10}$ ratio combined with the relatively large $D_{50}$ particle size of the silicon-based particles of this example embodiment of the invention provides the combined effect of providing an active material with relatively few of the smallest size fraction that lead to relatively high FCE losses and also relatively few of the largest size fraction being partially "dead" as active material, and enables thus employing particles with a relatively large average diameter giving a favourable first cycle efficiency without compromising on the charging/discharging rate nor compromising on the stability.

Internal "shell-resembling regions"

In one embodiment, the particles according to the invention may further comprise

- one or more internal shell-resembling spatial regions within the bulk material of the particles having an increased carbon content with a peak in the elemental carbon content, $C_{peak}$, being from 1 to 15 atom percentage points higher than an average carbon content, $C_{average}$, and wherein

- the peak in the elemental carbon content, $C_{peak}$, of each of the one or more internal shell-resembling spatial regions within the bulk material and the average carbon content, $C_{average}$, are determined by electron energy loss spectroscopy elemental analysis taken along a straight line running from at least the particle core up to but not including the particle surface, and wherein variations in the less than 5 nm length scale, preferably less than 2 nm length scale, and most preferably less than 1 nm length scale are smoothed out.

The term "internal shell-resembling spatial region within the bulk material" as used herein refers to a local spatial increase in the carbon content within the particle mass which is shaped as an internal layer encompassing the core of the particle. If there are two or more of these internal shell-resembling spatial region/layers, they should preferably be spaced apart from each other. They will usually be substantially concentric and attain a Russian doll resembling structure such as shown on the TEM-image of figure 4 which displays several shell-resembling layers marked with reference number 2. These one or more relatively carbon rich layers have a similar three-dimensional shape as a shell/coating deposited onto the outer surface of a particle, except that the layer(s) is/are located within the particle mass and not on its outer surface.

A mapping of the elemental balance by electron energy loss spectroscopy (EELS) in a straight line across and through the particle core of a particle having these internal shell-resembling layers will typically display a diagram as shown in figure 5. In this example embodiment, the particle is approx. 800 nm in diameter and contains four of these shell-resembling layers marked with reference number 2 on the figure. As seen in the diagram, the overall Si and C content in the particle is substantially homogenous. The curves for the Si-content and the C-content are horizontal. Thus, the (average) elemental ratio Si : C at the particle core substantially equal to the (average) elemental ratio Si : C at the outer region of the particle close to its surface. The EELS diagram of figure 5 contains a sharp increase at the surface. This is because this sample of the particles is given a surface coating of amorphous carbon.

Each of the internal shell-resembling layers is displayed in the EELS diagram by a descending peak in the Si content and corresponding ascending peak in the carbon content. The figure also presents a section of a TEM-image showing the same section as being applied in the EELS analysis to show that the opposite directed peaks in the Si and C contents on the curves for Si and C content along the line are due to the internal shell-resembling layers. The overlaid stapled vertical lines in figure 5 show that each of these corresponding peaks of increased carbon content and reduced silicon content at these positions from the particle centre coincides with an annular ring shown on the TEM-image. Each of these pairs of corresponding peaks of increased C and decreased Si on the graphs for the C and Si content, respectively. A $C_{peak}$ being at least 1 atom percentage points higher than $C_{average}$ is thus an indication of the presence of one relatively carbon rich embedded shell-resembling layer according to the invention.

In one embodiment, the determination of $C_{peak}$ content may advantageously comprise smoothing out variations on small length scales of < 2 nm length scale, and most preferably < 1 nm length scale by digital filtering of signal noise.

Digital filtering of signal noise in measurements is a standard procedure in most experimental procedures, and is thus well known to those skilled in the art. One way to do this is to let each datapoint be recalculated as the average of several neighbouring datapoints from the original data set. In a gaussian filter, the contribution of the neighbouring datapoints is weighted based on the distance from the datapoint to be calculated according to a gaussian distribution function. Thus, smoothening the measurements may in one embodiment be obtained by using a gaussian digital filter or by averaging the measurements made for a plurality of neighbouring spatial measuring-areas. The width of the digital filter should be < 5 nm , preferably < 2 nm, and most preferably < 1 nm, to avoid removing the information about the actual concentration variations.

In one embodiment, the determination of the $C_{peak}$ of the at least one shell-resembling relatively carbon-rich layer and the determination of the $C_{average}$ by electron energy loss spectroscopy elemental analysis is obtained by:

- preparing a cross-sectional slice of less than 70 nm thickness including the particle centre of the particle by focused ion beam (FIB),
- performing the EELS elemental analysis along a linear line running through the cross-section from the centre to the outer surface of the slice, and then
- optionally, smoothening the measurements by using a gaussian digital filter or by averaging the measurements made for a plurality of neighbouring spatial measuring-areas, and
- applying the local maximum for the carbon content of a first peak in the carbon content along said line at a distance from the particle centre to define the $C_{peak}$ of the first peak and if present, make a similar determination of the $C_{peak}$ for each other corresponding pair of peaks of increased carbon content and decreased silicon content present on said line, and

- determining the $C_{average}$ by averaging the determined C-content of all measurement points along the line except for the outer surface region.

The term "core" as used herein refers to the volumetric centre region of the particle while the term "outer surface region" refers to the particle mass being in close proximity of its outer surface, i.e. from the particle surface to 1 to 10 nm below the particle surface. The term does however not include any surface coating (if present) but refers strictly to the bulk particle mass at the surface region.

The observed effect of the one or more shell-resembling layers in the example embodiment of the particles according to the invention indicates that there may be an upper limit to the carbon concentration. Without being bound by theory, this is believed to be due to the increased carbon concentration at the shell-resembling layers will contribute both to stabilisation and to a reduction of lithium mobility. At relatively low increase in the carbon concentration, the stabilisation effect is observed to be the dominating effect, while at higher carbon contents the effect of reduced lithium mobility becomes more significant than the increase in stability. The empirical observations made by the inventors indicate that the local increase in carbon at the one or more shell-resembling layers may advantageously be less than 15 atom percentage points. That is, if the average carbon content of the particle is 20 atom%, then the (local) carbon content at the peak of the one or more shell-resembling layers should preferably be no higher than 35 atom%.

In one embodiment, the $C_{peak}$ of the at least one shell-resembling relatively carbon-rich layer may advantageously be in the range from 1 to 12 atom percentage points, preferably from 1 to 10 atom percentage points, more preferably from 2 to 8 atom percentage point, more preferably from 3 to 6 atom percentage points, and most preferably from 4 to 5 atom percentage points higher than an average carbon content, $C_{average}$.

The example embodiment of the particles according to the invention having one or more internal shell resembling layers are observed to, when applied as the active material of a negative electrode of a secondary LIB, to obtain a relatively high cycling stability.

Without being bound by theory, it is believed that the reason for observing the increased cyclability of such multilayer particles may be that since the current of electrons in an anode goes through the solid phases only, lithium ions will pick up electrons and start diffusing into silicon-based particles primarily at a few locations on the particle surface (at the contact points) and leave at the same location. When this occurs, a flow of lithium ions will move in the same direction and may drag along silicon atoms out of the silicon-based particle leading to a silicon leakage into the electrolyte. However, having regions high in carbon inside the bulk mass of the silicon-based particle is believed to act as a partial barrier to this flow and thereby spread the lithium diffusion over a larger area inside the silicon-based particles. The carbon rich phases/regions in the silicon-based particles are also believed to be more reluctant to let the silicon pass and thus make the silicon-based particles more stable towards charging/discharging cycling. The one or more relatively carbon rich embedded shell-resembling layer may be seen as an "armouring" of the silicon based bulk material. On the other hand, if these carbon-rich rings are far too carbon-rich, the lithium diffusion barriers may become too high, leading to a measurement of lower practically available charging capacity for a given charge/discharge rate.

In one embodiment, the particles according to the invention may advantageously have, with or without a surface coating, a conductivity being higher than $1.10^{-6}$ S/cm, preferably $> 1 \cdot 10^{-5}$ S/cm, more preferably $> 1.10^{-4}$ S/cm, more preferably $> 1.10^{-3}$ S/cm, more preferably $> 1 \cdot 10^{-2}$ S/cm, and most preferably $> 1 \cdot 10^{-1}$ S/cm, when measured in a cylindrical pellet with 1 cm diameter under a pressure of 4 tons.

In one embodiment, the silicon-based composite particles according to the first aspect of the invention are characterised in that the particles have a total chemical composition consisting of:

- a total content of carbon, $C_{total}$ being from 5 to 50 atom%, based on the total mass of the silicon-based composite particles, and
- the rest being silicon and unintentional impurities, wherein the unintentional impurities comprises less than 20 atom% H and/or less than 4 atom% O, and wherein:
- the silicon-based particles are made of a bulk material,
- the bulk material comprises a plurality of nanoscaled silicon domains embedded in a first matrix comprising nanoscale silicon carbide domains, and
- the particles, when subjected to XRD analysis applying unmonochromated CuK$\alpha$ radiation, exhibit one peak at around 28° having a Full Width at Half Maximum (FWHM) in the range from 0.5° to 8° and one peak around 36° having a FWHM in the range from 1° to 10°.

In one especially preferred embodiment, the elemental composition of the particle according to the invention may advantageously be:

- a total carbon content, $C_{total}$, of from 5 to 30 atom%, preferably from 6 to 25 atom%, preferably from 7 to 20 atom%, more preferably from 8 to 15 atom%, more preferably from 9 to 14 atom%, or most preferably from 10 to 12 atom%,

- a total amount of oxygen in the particle from 0.1 to 4 atom% O, preferably from 0.2 to 3 atom % O, more preferably from 0.3 to 2 atom % O, more preferably from 0.4 to 1 atom % O, or most preferably from 0.5 to 1 atom% O,
- a total amount of hydrogen in the particle of less than 5 atom%, preferably less than 1 atom%, and
- the rest being Si and unintentional impurities.

Surface coating

In one embodiment, the silicon-based composite particle may further comprise an outer coating. The outer coating may for example be intended to enhance stability against oxidation, to enhance electron conductivity, or to provide good strong chemical bonding between matrix and particle, or to improve dispersion properties. The outer coating may further be optimized to facilitate electron transport, lithium transport, and/or the charge transfer reaction. The outer coating may further be optimized to obtain a thin and stable SEI layer. The outer coating material may comprise carbon, metal-organic frameworks, organic molecules, oxides like $Li_xSi_yO$, $Ti_xO$, $Al_xO$, or any combination thereof. The coating may have a thickness in the range of from 1 to 100 nm, preferably from 2 to 60 nm, more preferably from 3 to 20 nm, and most preferably from 3 to 10 nm. The coating may be applied using wet chemical methods, CVD, ALD or other techniques.

In one preferred embodiment, the particle according to the invention further comprises a surface coating of an amorphous or crystalline carbon layer having a thickness in the range of from 0.5 to 10 nm, preferably from 1 to 5 nm, and most preferably from 2 to 3 nm as determined by Auger spectroscopy.

In particular, carbon coatings in the range 1-10 nm can be fairly accurately characterized using Auger spectroscopy. Also, FIB-TEM cross section images will clearly show the carbon coating as separate from the particle, with a clear contrast between the heavy silicon atoms and lighter carbon atoms. This characterization can be performed by any person skilled in the art. Similarly, any oxide coating can be clearly separated from a silicon based bulk by the same methods.

In one embodiment, the coating applied to the silicon-based composite particles is made by exposing the silicon-based composite particles to a carbon containing gas and heating to a coating temperature where said gas reacts with the silicon-based composite particles . In one embodiment, the coating temperature is from 30 °C to 1200 °C, preferably from 300 °C to 1000 °C, and most preferably from 600 °C to 900 °C.

It is observed from annealing of particles with and without coatings, that the annealing has separate beneficial effects for the coating and the particle. Without being bound by theory, it can be speculated that carbon coatings applied to the particles from a hydrocarbon or other organic precursor, will also contain a large amount of hydrogen. Upon moderate annealing, this carbon is likely to shed some hydrogen and undergo crosslinking, including the formation of a few aromatic rings. This can increase the electronic conductivity of the powder. At the same time, the densification of the carbon coating in this phase may block lithium transport.

Further annealing can then again reorganize the carbon into structures with a larger fraction of carbon undergoing ring formation, giving a further increase in the electron conductivity, and at the same time an increase in the lithium conductivity through the sample. It appears that the optimal temperature window for facilitating transport through the coating is similar to the optimal temperature for the nanocrystal formation. At very high temperature it is well known that the coating and the silicon may form detrimental SiC in the boundaries - this does not seem to be the case in the samples of the present invention because of the limited carbon mobility at the relevant temperatures.

As shown in one example below, a powder can have good surface kinetics (electron and lithium conductivity) without an annealing causing the structure changes causing a mixture of amorphous and crystalline Si and SiC domains as discussed above. In such cases, one can often observe, when the particles are investigated for use as active material in the negative electrode of a LIB, a gradual increase in the crystal structure, as loosely bonded Si or C atoms are moved around by the Li until they find a more solid anchoring in a nanocrystal. This phenomenon is also documented from cycling of amorphous silicon nitride and can be termed 'electrochemical annealing'. The gradual improvement of kinetics is not beneficial in a commercial cell, where it is more desirable to start with the full capabilities of the battery. It is therefore preferable to obtain a thermal annealing, rather than an electrochemical anneal. The combined effect of the gradual improvement of the bulk with the annealing and the non-monotonous behaviour of the coating conductivity, can give unexpectedly poor results in the intermediate temperature range 700-800 °C, where the coating may be at its densest state. The lithium conductivity of the coating is difficult to measure as a free parameter, while the electron conductivity can be measured by simply compressing the powder to a pellet and measure the electronic DC resistance between the two surfaces compressing the pellet. Our conductivity measurements have been performed by applying a force of 4 metric tons to a cylindrical powder pellet of 1cm diameter, and with thickness approx. 1 mm. Knowing the resistance and the pellet dimensions, the resistivity can be calculated by any person skilled in the art.

A pristine, untreated powder from the present invention may have an initial conductivity < $1.10^{-6}$ S/cm. Annealing without coating is likely to increase the conductivity by an order of magnitude. A 2 nm or more carbon coating may increase the conductivity to > $1·10^{-1}$ S/cm after annealing.

Milling

Almost all of the above described silicon-based composite particles are shaped spherical or near spherical after formation. The spherical or near spherical particles may however agglomerate into single-branched or multi-directional chains of particles. These chains of agglomerated particles be broken into single particles and/or small clusters of particles by a relatively gentle milling process, i.e. a milling process with forces (feeding and grinding pressure) that are sufficient to break the agglomerated chains of particles so that the resulting particle size distribution becomes more homogenous, but not so large that a major fraction of the particles have had their surface geometry altered by the milling process.

Thus, in one embodiment, the silicon-based composite particles according to the first aspect of the invention further comprises gently milled particles having a largely spherical shape as determined by the following criteria:

- at least 50 %, preferably at least 60%, more preferably at least 70 %, more preferably at least 80 %, more preferably at least 90 %, and most preferably at least 95 % of all subsections of particle circumference lines apparent in a SEM picture of the material are circular arcs,
- each circular arc in the a SEM picture has an arc length, s, being determined by the relation $s = r\cdot\pi/180\cdot\theta$, where r is the radius of a circle having the same curvature of its circumference line as said circular arc, $\pi$ is a mathematical constant equal to the ratio of a circle's circumference line to its diameter, and $\theta$ is the angle in degrees which said circular arc subtends at the centre of the said circle, and
- said angle $\theta$ is in the range from 10 to 360°.

In one embodiment, the silicon based composite particles according to the first aspect of the invention have a BET surface area, as determined by standard ISO 9277:2010, from 0.2 to 10 $m^2/g$, preferably from 0.3 to 8 $m^2/g$, more preferably from 0.4 to 6 $m^2/g$, and most preferably from 0.5 to 4 $m^2/g$.

Characteristics of used particles

The above description of the silicon based composite particles is largely made in relation to "pristine" particles as they are after being produced with or without the annealing.

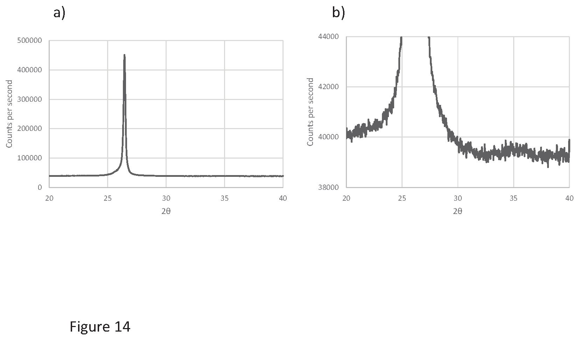

However, when the silicon based composite particles according to the first aspect of the invention are incorporated in a negative battery electrode, it may be difficult to discern the Bragg peaks using a normal XPD measurement. The beam size will normally be so wide and go through so much electrode material that it probes not only the particle but also carbon sources around it, like graphite or conductive carbon additives. In this case, the silicon peak may be close to invisible on the shoulder of the graphite peak, and the 111 peak (at 28° with CuK$\alpha$ radiation) may be difficult to quantify, as illustrated in figures 14a) and 14b) which show a XPD diagram of a commercially relevant mix of the particles according to the first aspect of the invention with graphite in a 15:85 ratio by weight.

As seen in figure 14a), where the dominant graphite peak is shown with its full height, the crystalline graphite signal completely dominates the weak XPD pattern from the nanocrystalline silicon. In figure 14b), which is an extreme close-up of the XPD diagram shown in figure 14a), the SiC peak can barely be discerned next to the graphite peak, while the Si peak is largely obscured by the graphite peak.

This issue can be resolved be resolved by using a Transmission Electron Microscope (TEM) in diffraction mode. The narrow beam of the electron diffraction measurement allows a high selectivity, and can be shown to give the same information as the XPD measurement. Using a Focused-Ion-Beam (FIB) in a Scanning Electron Microscope (SEM), a TEM lamella can be prepared, so that the lamella includes a cross section of a single particle. A 2D diffraction pattern can then be collected.

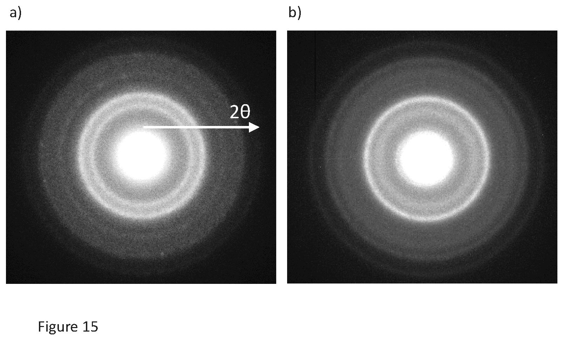

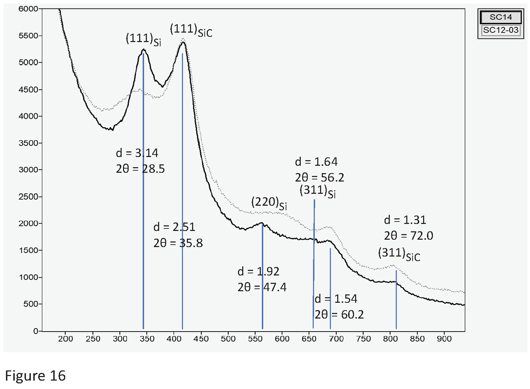

Figure 15a) shows the diffraction pattern of a pristine particle, figure 15b) shows a similar particle after repeated lithiation and delithiation in a cell. The radii of the diffraction rings shown in the image are uniquely correlated to the 2theta of the peaks in the XPD diagram, and is a function of the relation between the electron beam wavelength and the XPD beam wavelength. This relation is well known by the person skilled in the art. In these images, the TEM used an acceleration voltage of 200kV, resulting in an electron wavelength of 0.025Å, much smaller than the 1.5418Å of the XPD measurement. Still, using the Bragg's law, the interatomic spacing (d) can be calculated in the same manner from both sources. Also, in fig. 15a), the rings corresponding to Si and SiC can be clearly recognized. In the cycled particle in fig. 15b), the Si phase appears more amorphous, with a softer ring, but the SiC ring is clear. This is consistent with literature findings that crystalline silicon is amorphized during lithiation cycles. These diffraction patterns are integrated in the tangential direction, 360 degrees (i.e. perpendicular to 2$\theta$), to have 1-dimensional patterns. These 1-dimensional patterns are shown in figure 16.

The information from the 2D images in figures 15a) and 15b) may be converted to a 1D plot and the 2$\theta$ angles may be converted to Cu radiation-equivalent values to facilitate comparison with the XPD results, as shown in figure 16. The intensity is shown as a function of distance from the centre of the rings, integrated over the full circle in the tangential direction to remove noise, and to transform the 2D image into a 1D representation. The x-axis in this image is the number of pixels from the centre of the image, which correlates with d and with $2\theta$, while the Y axis is the integrated beam intensity. Many TEM instruments will produce an ellipsis instead of a circle, due to details in the sensor placements, an expert in the field will be able to correct for this before integrating around the circle. As shown in Fig 16, the Si and SiC peaks appear clearly in the expected positions. There is therefore full equivalence between the XPD peaks identified in the claims, and the diffraction peaks originating from the TEM diffraction.

A crystalline silicon phase becomes amorphous when lithiated and subsequently delithiated. A comparison of similar particles (made by the same method/process parameters) where one particle is pristine and the other has gone through several lithiation/delithiation cycles is shown by the images in figures 15a) and 15b), respectively. Both images are processed as described above to give the two overlaid plots/graphs shown in figure 16. The solid thick line/plot corresponds to the pristine particle while the dotted thin line/plot corresponds to the lithiation/delithiation cycled particle. As seen on figure 16, the SiC peak at 35.8° is virtually identical in both plots. However, the peak at 28.5° is substantially broadened in the plot from the cycled particle. The fact that the silicon phases in the particle have been amorphized through lithiation, does not change the fact that the Si crystallites were present when the particle was originally introduced to the electrode, before the first lithiation. Using the TEM techniques generating similar XRD curves as shown in figure 3, it can be shown that the Si and SiC phases have in many cases not changed size or position substantially during the lithiation, so despite the broadening of the Si peak, the material can be recognized as coming from the same source.

Example embodiment of suited method for manufacturing the particles

The silicon- and carbon-based composite particles according to the invention are preferably produced by condensation and chemical vapour deposition (CVD) of a mixture of a silicon containing precursor gas and a carbon containing precursor gas in a protected atmosphere (i.e., contains no or only insignificant amounts of oxygen).

The example embodiment of the method for producing silicon-based particles comprises:

- applying a reactor having a decomposition compartment containing a first reactor gas having an initial pressure in the range from $5\cdot10^3$ to $6\cdot10^5$ Pa and a first reactor temperature in the range from 450 to 650 °C,
- forming a precursor gas mixture comprising a first precursor gas of a silicon containing compound and a second precursor gas of a carbon containing compound, wherein the atomic ratio between silicon and carbon, Si:C, in the precursor gas mixture is in the range 0.2 to 50,
- injecting the precursor gas mixture into the decomposition compartment and mixing it with the first reactor gas to form a second reactor gas mixture, characterised in that the method further comprises:

    either:

    - maintaining the second reactor gas mixture inside the decomposition compartment for a residence time in the range from 10 to 300 seconds while maintaining the temperature of the second reactor gas mixture to be within $\pm20$ °C, preferably within $\pm10$ °C, more preferably within $\pm5$ °C, and most preferably within $\pm1$ °C from the first reactor temperature,

    or:

    - maintaining the second reactor gas mixture inside the decomposition chamber for a residence time in the range from 10 to 300 seconds and, during the residence time, subjecting the injected precursor gas mixture to at least one temperature alteration from the first reaction temperature to a second reaction temperature and then back to the first reaction temperature, and wherein
    - the absolute temperature difference between the first and second reaction temperature is in the range from 1 to 100 °C, preferably from 3 to 75 °C, more preferably from 5 to 50 °C, more preferably from 10 to 35 °C, and most preferably from 20 to 25 °C,

    and then

    - extracting the particles from the decomposition compartment,
    - cooling the particles to room temperature, and
    - heating the particles at a ramp rate in the range of from 1 to 5 °C/minute up to a annealing temperature in the range from 800 to 1000 °C and then cooling the particles.

The term "absolute temperature change of X °C" as applied herein, means that the temperature difference between the first and second reaction temperature may either be such that the second reaction temperature is either X °C lower than the first reaction temperature or X °C higher than the first reaction temperature.

In an embodiment of the suited method, the absolute temperature difference between the first and second reaction temperature is in the range from 5 to 100 °C, more preferably from 10 to 75 °C, more preferably from 15 to 50 °C, more preferably from 20 to 40 °C, and most preferably from 25 to 35 °C

In an embodiment of the suited method, the first reactor temperature is in the range from 475 to 630 °C, preferably from 500 to 620 °C, more preferably from 525 to 600 °C, and most preferably from 550 to 580 °C.

In an embodiment of the suited method, the residence time may advantageously be in the range from 12.5 to 250 seconds, preferably from 15 to 200 seconds, more preferably from 17.5 to 150 seconds, more preferably from 20 to 100 seconds, more preferably from 25 to 75 seconds, more preferably from 30 to 50 seconds, more preferably from 0.2 to 280 seconds, preferably from 0.5 to 250 seconds, more preferably from 1 to 230 seconds, more preferably from 1.5 to 200 seconds, more preferably from 5 to 180 seconds, more preferably from 10 to 150 seconds, more preferably from 15 to 100 seconds, more preferably from 25 to 75 seconds, and most preferably from 2 to 50 seconds.

In an embodiment of the suited method, the atomic ratio Si : C in the precursor gas mixture may be in the range from 0.3 to 40, preferably from 0.4 to 30, more preferably from 0.5 to 25, more preferably from 0.6 to 20, more preferably from 0.8 to 15, more preferably from 1.0 to 10, more preferably from 1.2 to 4, more preferably from 1.5 to 2.0, more preferably from 0.3 to 40, preferably from 0.4 to 35, more preferably from 0.5 to 30, more preferably from 0.6 to 25, more preferably from 0.8 to 20, more preferably from 1.0 to 15, more preferably from 1.5 to 12, more preferably from 2 to 10, and most preferably from 2.5 to 7.5.

The embodiment of the particles having a $D_{50}$ of from 1 to 9 $\mu$m and a relatively narrow particle size distribution of a $D_{90}/D_{10}$ ratio in the range from 1 to 9 may be manufactured by maintaining the second reactor gas mixture inside the decomposition compartment for a residence time in the range from 10 to 300 seconds while maintaining the temperature of the second reactor gas mixture to be within $\pm$20 °C, preferably within $\pm$10 °C, more preferably within $\pm$5 °C, and most preferably within $\pm$1 °C from the first reactor temperature.

This may be achieved by controlling the flow conditions such that the major part, preferably all particles, in the gas phase inside the reactor are exposed to as close as practically possible the same average temperature conditions and endurance (residence time) before being extracted and cooled. In a regular continuous flow reactor, thermal convection flows will often become dominant when the reaction time goes above seconds, making it difficult to obtain laminar flow. The residence time for any single atom or particle in the reactor can vary greatly depending on the path taken. This means that more precursor gas can leave the reactor without being consumed, or that many particles exit the reactor while still being very small. At the same time, there is no obvious upper limit to particle size, as some particles may be cycled around in the reactor for a long time.

In one embodiment, the suited method may further comprise applying a tubular hot-wall reactor where a constant stream of preheated mixture of precursor gases and the preheated first gas are simultaneously injected in one end, and where the flow conditions through the reactor are laminar to ensure a predictable travel time before the resulting particles are extracted at the opposite end.

Another way of ensuring more or less equal processing conditions is to inject the mixture of preheated precursor gases into a closed hot wall reactor and either extract the entire batch when obtaining the intended residence time by flushing or vacuum suction, or to allow the particles to grow to be so heavy that they settle out of the gas phase and then be collected and extracted. In particular, rapid acceleration at a corner may lead to heavier particles settling out, as in a cyclone particle separator.

The latter solution of letting the particles grow until they fall out of the gas phase may have a profound sorting effect on the produced particles. This sorting effect may be sufficiently strong to obtain a narrow particle size distribution having the intended $D_{90}/D_{10}$ ratio also when including the smaller size fraction particles which remain entrained in the gas phase and that exit the reactor together with the gas they are entrained in when the particles are collected.

In one embodiment, the suited method may advantageously obtain the maintaining of the temperature of the second reactor gas mixture inside the decomposition compartment by:
either

- applying a reactor having a tubular hot-wall decomposition compartment having a first end and a second, and
- injecting a constant volume flow of preheated mixture of precursor gases and a constant volume flow of preheated first reactor gas in the first end forming a constant flow volume of second reactor gas mixture inside the tubular hot-wall decomposition compartment,
- passing the second reactor gas mixture under laminar flow conditions with a Reynolds number of less than 2000 through the tubular hot-wall decomposition compartment from its first to its second end, and
- extracting the second reactor gas mixture including formed particles at the second end,
  or
- applying a reactor having a closed hot-wall decomposition compartment containing a first reactor gas, and

- injecting the preheated mixture of precursor gases into the hot-wall decomposition compartment at a first moment in time forming a second reactor gas mixture, and
- when the residence time is obtained, counting from the first moment in time, extracting both the second reactor gas mixture and formed particles from the hot-wall decomposition compartment by either vacuum suction or flushing,

or

- applying a reactor having a closed hot-wall decomposition compartment containing a first reactor gas and a cooled collecting chamber at the bottom of the decomposition compartment,
- injecting the preheated mixture of precursor gases into the hot-wall decomposition compartment forming a second reactor gas mixture, and
- maintaining the second reactor gas mixture in the hot-wall decomposition compartment until the formed particles grow to a size where they settle out of the second reactor gas mixture and falls by gravity into the collection chamber.

The example embodiment of the present particles containing one or more internal shell-resembling layers may be manufactured by allowing a thermal convection flows to transport the gas between different zones of the decomposition chamber heated to the first and second reaction temperature, respectively. The particles carried with the gas current can exchange energy through convection and/or radiation with the chamber walls, meaning that the temperature controlling the particle growth varies with the position in the decomposition chamber.

The term "initial pressure" as used herein takes into account that the pressure inside the free-space compartment of the reactor may be allowed to vary during the injection of the precursor gas mixture such that the initial pressure refers to the pressure of the reactor gas in the free-space compartment at the moment the injection of the precursor gases is initiated.

The term "residence time" as used herein refers to the time span from the moment injected precursor gas begins to decompose and form seeds and up to the moment to these seeds are grown and converted to the intended product particles being extracted from the free-space compartment of the reactor. In the case of continuous production by applying a once-through reactor, such as e.g. a hot-wall tube reactor where precursor gases are continuously being injected at one end and produced particles are extracted at the opposite end, the residence time refers to the time span from a volume of precursor gas is injected until the particles made thereof exits at the opposite end of the tube reactor.

In an alternative embodiment, the manufacturing process may be a batch process by applying a reactor having a closed free-space compartment. In this embodiment, the injection of the precursor gas will increase the pressure inside the free-space compartment, and the residence time refers to the time span from the moment the injection of precursor gases are initiated up to the moment the gas and particle content of the free-space compartment are extracted and collected by either flushing or vacuum suction.

In one embodiment, the at least one temperature alteration from the first reaction temperature to a second reaction temperature is obtained by

either:

- applying a reactor having a hot-wall decomposition chamber comprising at least one first zone and at least one second zone, where the at least one first zone has a wall temperature equal to the first reaction temperature, and the at least one second zone has a wall temperature equal to the second reaction temperature, and
- transporting the precursor gas mixture in the hot-wall decomposition by thermal convection currents between the at least one first and the at least one second zones,

or:

- applying a reactor having a hot-wall decomposition chamber comprising an injection zone and a first decomposition zone having walls with a wall temperature equal to the first reaction temperature, and
- forming a turbulent flow in the injected precursor gas mixture inside the decomposition chamber transporting the second reactor gas mixture between the injection zone and the first decomposition zone of the of the how-wall decomposition chamber,

or:

- applying a reactor having a tubular hot-wall decomposition chamber comprising a plurality of alternating first zone and second zones, where the first zones have a wall temperature equal to the first reaction temperature, and the second zone has a wall temperature equal to the second reaction temperature, and
- injecting the precursor gas mixture, optionally mixed with a first reactor gas to form a second reactor gas, at a first end of the tubular hot-wall decomposition chamber and passing the precursor gas mixture, optionally the second reactor gas mixture, through the tubular hot-wall decomposition chamber under laminar flow conditions with a Reynolds number of less than 2000.

The particle size will also be dependent on temperature. High temperature and low residence time will give small particles. Low temperature and long residence time will give larger particles. It is further possible to achieve smaller particles by dilution of the silane, or the silane/hydrocarbon mix by for instance $H_2$, argon or $N_2$. It is further possible to run the process at low pressure <100 mbar, atmospheric pressure or higher pressure. Alternatively, it is possible to alter the pressure during the growth of the particles. After the particles have grown for the chosen residence-time the particles may in one embodiment be extracted by either flushing or vacuum.

In order to get an average particle size >500 nm, the reaction temperature typically needs to be relatively low (<600 °C), and the residence time long (>10 s). In many reactor types (fluidized bed or flow-through reactors) it is very difficult to control the reaction time, as some gas will find a short route through the decomposition chamber, while others will find a long route. This wide distribution will lead to production of small particles and low utilization of the reactant species for the gas that took the short route, or excessive particle growth and agglomeration in the gas that took the long route. It may therefore in one embodiment, be advantageous to control the residence time to obtain both size control and good reactant gas utilization. A long residence time means that a laminar flow field or near plug flow reactor will be more difficult to achieve due to the change in gas density as precursor gases decompose and produce light hydrogen gas.

One way to achieve a fairly homogeneous residence time, is by filling a closed decomposition chamber so that the pressure rises. As the pressure increases to a point where the reaction rate becomes significant, the reaction will accelerate at the same time in all parts of the chamber, giving fairly homogeneous growth conditions. The homogeneity of the growth conditions can also be enhanced by a medium filling rate. If the chamber furthermore has walls with a temperature difference, this may enable a thermal convection current mixing the gas and providing the desired temperature fluctuations to produce the ring structures. The reaction can be stopped by pumping or flushing the gas from the decomposition chamber and moving the particles and gas to a cold zone where the reaction stops.

As silane is consumed faster than most hydrocarbon precursors, this could lead to a gradient with increased carbon content to the surface of the particle which is likely to result in larger expansion in the core section of the particle as than at the periphery, resulting in cracking of the particle during cycling. By continuously feeding more gas into the chamber even after the reaction has started, it is possible to maintain similar conditions in the early and late phases of the particle production, so that the carbon content is mainly controlled by temperature, not primarily by the gas mixture. Also, allowing a little carbon precursor gas to be present at the start of the silane filling, can contribute to smaller differences between core and outside of the particle.

The continuous filling of a fixed volume can also contribute to turbulent mixing of the gases, giving more homogeneous gas concentrations, and allowing the temperature variation required for forming the one or more shell-resembling layers inside the bulk material of the particle.

The term "first precursor gas of a silicon containing compound" as used herein means any silicon containing chemical compound being in the gaseous state and which reacts to form Si-particles at the intended reaction temperatures. Examples of suited first precursor gases include, but are not limited to, silane ($SiH_4$), disilane ($Si_2H_6$), and trichlorosilane ($HCl_3Si$), or a mixture thereof.

Likewise, the term "second precursor gas of a carbon containing compound, " as used herein means any chemical compound containing carbon that causes C-atoms to be incorporated into the matrix surrounding the Si-particles being formed when heated to the intended reaction temperatures. Examples of suited second precursor gases of a carbon containing compound include, but are not limited to alkanes, alkenes, alkynes, aromatic compounds, and mixtures thereof. In example embodiments, the second precursor gas of a carbon containing compound may be at least an organosilane or a hydrocarbon, preferably methane ($CH_4$), ethane ($C_2H_6$), propane ($C_3H_8$), ethene ($C_2H_4$), ethyne ($C_2H_2$), cyclohexane, cyclohexene, toluene, benzene, propene, butene, pentene or mixtures thereof. This gas phase may also contain smaller or larger amounts of hydrogen.

Especially preferred example embodiments of precursor gas, i.e. the homogeneous gas mixture of a gaseous silicon and hydrogen compound and a gaseous substitution element C and hydrogen compound, are either silane ($SiH_4$) or disilane ($Si_2H_6$) mixed with a hydrocarbon gas chosen from one of; methane ($CH_4$), ethane ($C_2H_6$), propane ($C_3H_8$), butane ($C_4H10$), ethene ($C_2H_4$), ethyne ($C_2H_2$), propene ($C_3H_6$), butene ($C_4H_8$), pentene ($C_5H_{10}$), cyclohexane, cyclohexene, toluene, benzene and mixtures thereof. The partial use of larger and stable ring structures are likely to be preferable as this will likely enhance the ratio of C-C to Si-C bonds in the first matrix.

The production yield in gas phase reaction processes, defined as the ratio of the mass of produced particles over the mass of precursor gas being fed to the reactor, is shown to be dependent on process parameters such as the concentration of the precursor gases in the reaction zone, the reaction temperature, and/or the residence time of the precursor gases in the reaction zone. In general, the higher reaction temperature, the higher dissociation degree of the precursor gases and thus higher production yields. Furthermore, the residence time may also have a profound effect on the production yield. In general, long residence times enables more of the injected gases to react and form particles. The feature of using relatively long residence times to gain large particles is therefore beneficial from a production yield point of view. The present method has thus the advantage of obtaining high production yields which gives the method a significant economic advantage since silicon hydride gases such as silane, disilane etc. are comparatively expensive.

In one embodiment, the suited method may advantageously obtain the maintaining of the temperature of the second reactor gas mixture inside the decomposition compartment by:

either

- applying a reactor having a tubular hot-wall decomposition compartment having a first end and a second end, and
- injecting a constant volume flow of preheated mixture of precursor gases and a constant volume flow of preheated first reactor gas in the first end forming a constant flow volume of second reactor gas mixture inside the tubular hot-wall decomposition compartment,
- passing the second reactor gas mixture under laminar flow conditions with a Reynolds number of less than 2000 through the tubular hot-wall decomposition compartment from its first to its second end, and
- extracting the second reactor gas mixture including formed particles at the second end,

or

- applying a reactor having a closed hot-wall decomposition compartment containing a first reactor gas, and
- injecting the preheated mixture of precursor gases into the hot-wall decomposition compartment at a first moment in time forming a second reactor gas mixture, and
- when the residence time is obtained, counting from the first moment in time, extracting both the second reactor gas mixture and formed particles from the hot-wall decomposition compartment by either vacuum suction or flushing,

or

- applying a reactor having a closed hot-wall decomposition compartment containing a first reactor gas and a cooled collecting chamber at the bottom of the decomposition compartment,
- injecting the preheated mixture of precursor gases into the hot-wall decomposition compartment forming a second reactor gas mixture, and
- maintaining the second reactor gas mixture in the hot-wall decomposition compartment until the formed particles grow to a size where they settle out of the second reactor gas mixture and falls by gravity into the collection chamber.

The term "substantially at a temperature" as used herein takes into account that in practice it is difficult to maintain and control the temperature of the gas mixture/precursor gases flowing inside the free-space compartment to be exactly on the intended temperature. There may in practice be involuntary/unavoidable deviations of the temperature in the reaction gas mixture from the intended temperature of the reaction gas mixture of less than $\pm 25\ ^{\circ}C$, preferably less than $\pm\ 10\ ^{\circ}C$, and most preferably less than $\pm\ 5\ ^{\circ}C$.

In one embodiment, the suited method may further comprise forming a carbon surface coating onto the particles by a gas deposition at a temperature below a first coating temperature before the step of annealing the particles at the annealing temperature, and where the annealing temperature is at least 50 °C higher than the first coating temperature.

In one embodiment, the suited method may further comprise forming a carbon surface coating onto the particles by applying a carbon precursor through a wet-chemical process before the annealing. In one embodiment, the carbon precursor may advantageously be one or more of bitumen, pitch, polyacrylonitrile, polystyrene, sugar, or phenolic resin.

Second aspect of the invention - a negative electrode for a secondary lithium-ion electrochemical cell

In a second aspect, the invention relates to a negative electrode for a secondary lithium-ion electrochemical cell, comprising:

- an active material,
- a binder material, and
- a current collecting substrate,

characterized in that the active material is a silicon-based particle according to the first aspect of the invention.

Third aspect of the invention - use of the particles in a LIB

In a fourth aspect, the invention relates to use of a particle according to first aspect of the invention in a secondary lithium-ion electrochemical cell.

**List of figures**

Figure 1 is a facsimile of figure 1 of Sung et al. (2021) [ref 6].

Figure 2 is an XRD-diagram of the S1 example embodiment before the post-production annealing according to the invention.

Figure 3 is a series of XRD-curves of the S1 example embodiment subject to different post-production annealings according to the invention.

Figure 4 is a TEM image of the S3 example embodiment of a particle according to the invention having a plurality of internal shell-resembling layers.

Figure 5 is an EELS diagram of the S3 particle shown in the TEM image in figure 4.

Figure 6 displays a TEM image and an EELS diagram for the S8 example embodiment of the particle according to the invention.

Figure 7 displays a TEM image and an EELS diagram of a particle of the S8 example embodiment of the particle according to the invention.

Figure 8 displays a TEM image and an EELS diagram of another particle than shown in figure 7 of the S8 example embodiment of the particle according to the invention.

Figures 9 and 10 shows a Fourier transform with band pass-masks centered at 0.314 and 0.252 nm, respectively to highlight crystalline silicon and silicon carbide of the example embodiment shown in the TEM-photo of figure 7a).

Figure 11 shows cycling data for of a particle of the S11 example embodiment of the particle according to the invention -in three versions:

S11-1: No annealing
S11-2: Annealing to 820 °C for 2h
S11-3: Coating with sugar, then annealing to 820 °C for 2h
In all cases the powder is mixed 50/50 with graphite
Formation - Rate test (3 cycles each of C/10,C/5,C/3,C/2,C,2C)
Further testing for S11-2: 20x(C/20+10xC/3), after approx. 250 cycles: New rate test, then back to 25x(C/10+10x1C/3)
For S11-3 20x(C/20 + 10xC/2) after approx. 250 cycles (C/10+20xC/2)
The highest point of a slow cycle has been used as the 'max capacity' for S11-3.

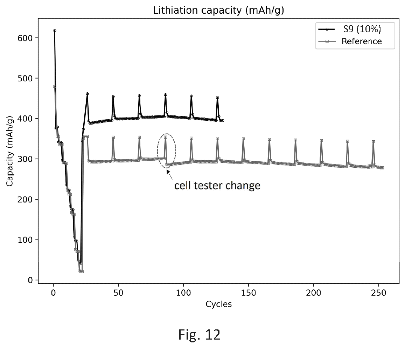

Figure 12 shows cycling data for the S9 powder, produced by the method described in this document, with a subsequent 650 °C annealing, PAN coating and 500 °C crosslinking of the polymer. The reference is a pure graphite electrode, while the upper line shows a cell with 10wt% silicon in 90 wt% graphite. The cycling program was 4xC/20 - 3xC/10 - 3xC/5 -3xC/3 - 3xC/2 - 3x1C - 3x2C - 1xC/20, followed by repeated sets of 2xC/10+20xC/2. The capacity and FCE are measured in a separate cell without graphite to reduce uncertainty, while the graphite helps to avoid electrode delamination, so the silicon degradation can be properly measured. The gradual increase in capacity for the first 50-ish cycles can probably be attributed to electrochemical annealing.

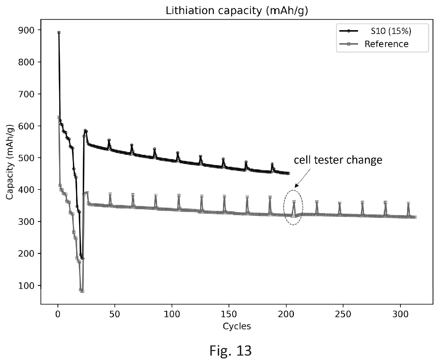

Figure 13 shows cycling data for the S10 powder, produced by the method described in this document, with a subsequent bitumen coating and 900 °C annealing. The reference is a pure graphite electrode, while the upper line shows a cell with 15 wt% silicon in 85 wt% graphite. The cycling program was 4xC/20 - 3xC/10 - 3xC/5 -3xC/3 - 3xC/2 - 3x1C - 3x2C - 1xC/20, followed by repeated sets of 2xC/10+20xC/2. Again, FCE and capacity is measured in separate cells without graphite. As the powder was fully nanocrystalline, there was no gradual increase observed - the powder started at max capacity.

Figure 14a) shows an XRD pattern from a commercially relevant mixture of the particles according to the invention mixed with graphite in a 15:85 ratio by weight, while fig 14b) shows a closeup of the same image, indicating the presence of the SiC peak, while the Si peak can still not be properly identified on the shoulder of the graphite peak.

Figures 15a) and 15b) show TEM diffraction pattern from individual particles in a battery electrode. In the image of figure 15a), the beam has focused on an uncycled particle, with approx. 16 wt% carbon, annealed at 890 °C, while the image of figure 15b) the beam has focused on a cycled particle, with approx. 12 wt% carbon and annealed at 925 °C. The arrow marked $2\theta$ indicates how the 2D diffraction of the image relates to the 1D plot from a XPD measurement.

Figure 16 shows the result of the angular integration of the images in figures 15a) and 15b), with the peak positions identified and recalculated to the corresponding $2\theta$ values for a CuKa PXD measurement, demonstrating the equivalence of the measurement methods. The figure clearly shows the Si peak of the cycled silicon being broadened due to the amorphization during lithiation and delithiation.

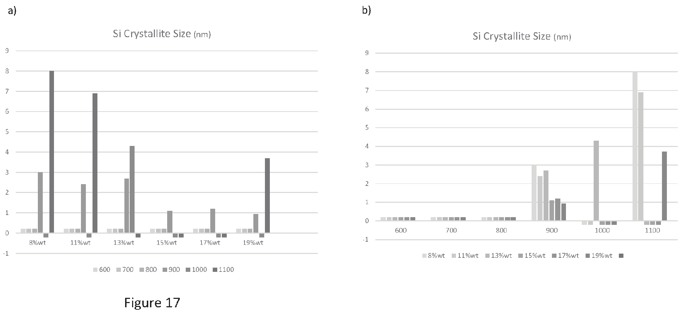

Figures 17a) and 17b) are bar charts showing Si crystallite sizes estimated by Rietveld refinement of X-ray Powder diffraction (XPD) of samples of the particles according to the invention having a carbon content of 8, 11, 13, 15, 17 and 19 wt%, respectively and where samples of each of said samples with said carbon content were annealed at a temperature of 600, 700, 800, 900, 1000, and 1100 °C, respectively. Fig. 17a) is a bar chart representing the estimated Si crystallite sizes of samples annealed at different temperatures grouped as a function of carbon content, while fig. 17b) is bar chart representing the estimated Si crystallite sizes of the same samples as in fig. 17a), but now grouped as a function of annealing temperature. Samples found to be amorphous is marked with the small bars of 0.2 crystallite size, while a negative bar indicates that the measurement is lacking.

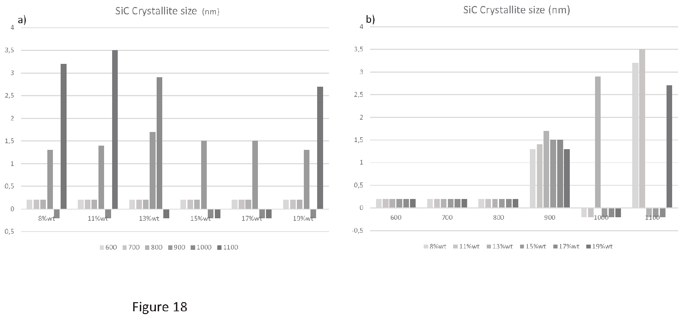

Figures 18a) and 18b) is similar to figures 17a) and 17b), respectively, but now for the estimated SiC crystallite sizes as determined by Rietveld refinement of X-ray Powder diffraction (XPD) data.

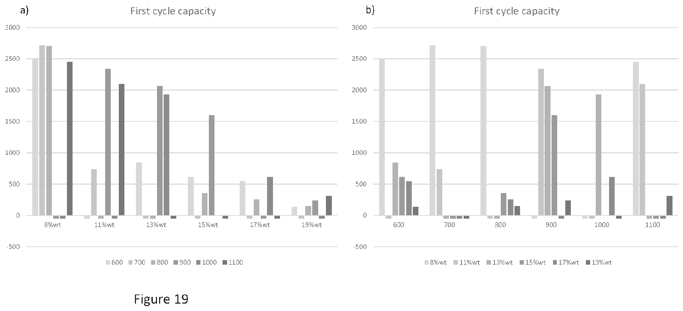

Figures 19a) and 19b) are bar charts showing measured first cycle lithiation capacities of the same samples of particles according to the invention applied in figures 17a), 17b), 18a) and 18b). Fig. 19a) show the measured first cycle lithiation capacities of the samples grouped as a function of carbon content, while fig. 19b) show the measured FCE of the samples grouped as a function of annealing temperature.

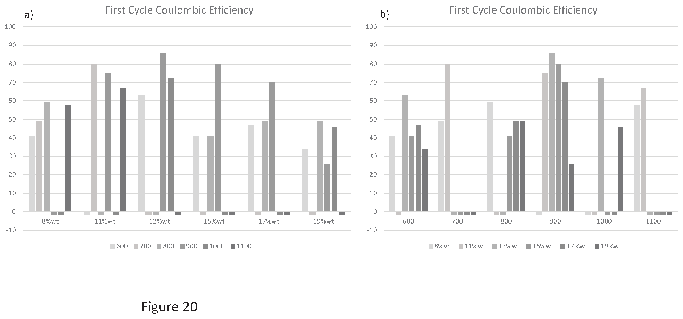

Figures 20a) and 20b) are bar charts showing measured first cycle coulombic capacities (FCC) of the same samples of particles according to the invention applied in figures 17a) to 19b). Fig. 20a) show the measured first cycle lithiation capacities of the samples grouped as a function of carbon content, while fig. 20b) show the measured FCE of the samples grouped as a function of annealing temperature.

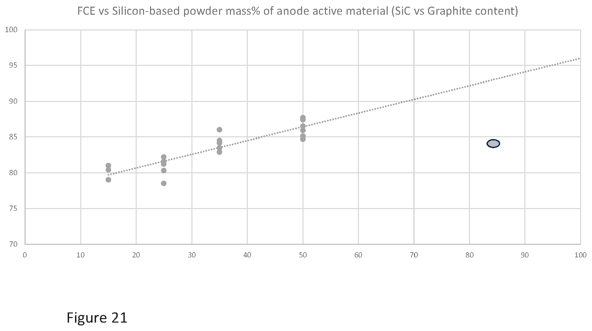

Figure 21 is a plot of measured first cycle lithiation capacities when a sample of the particles according to the invention is mixed with different amounts of graphite and applied as the active material of a negative electrode of a secondary LIB. The x-axis denotes the mass fraction of the particles according to the invention in the mass of active material in the negative electrode, the remainder being graphite.

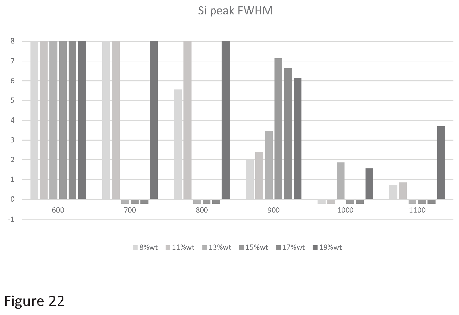

Figure 22 is a bar chart showing the FWHM of the Si peak at approx. 28° for samples with different carbon contents and annealing temperatures, grouped by temperature. For amorphous samples, where the peak is not well defined, the value has been fixed to 8 as a visual aid. Negative values indicate a missing data point.

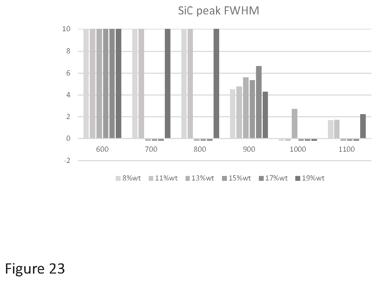

Figure 23 is a bar chart showing the FWHM of the SiC peak at approx. 36° for samples with different carbon contents and annealing temperatures, grouped by temperature. For amorphous samples, where the peak is not well defined, the value has been fixed to 10 as a visual aid. Negative values indicate a missing data point.

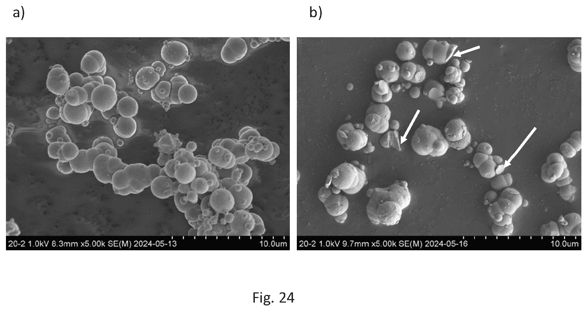

Figures 24a) and 24b) show SEM pictures of a particle material according to the invention before (figure 24 a)) and after (figure 24 b)) a gentle milling process. In the non-milled material, the circumference of all particles can be seen as agglomerates of substantially circular circumferences, while in the gently milled material parts of the circumference of some of the particles are non-circular as indicated by the white arrows.

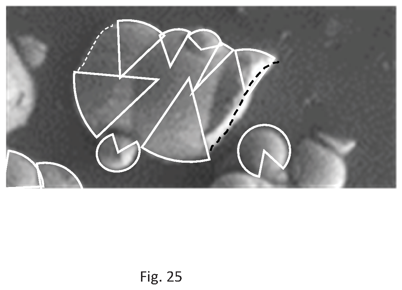

Figure 25 shows a subsection of the SEM photograph in figure 24b) and illustrates examples of circumference lines being circular arcs. The circumference parts which are the result of breakage due to the milling process and does not form part of an arc/circle are marked with a dotted line.

**Verification of the invention**

The invention will be described in further detail by way of example embodiments.

Example - production of particles

A series of samples of the particles according to the invention, labelled S1 to S6 herein, were made by applying a tubular steel chamber of approx. 30 litres being closed at both ends as the decomposition chamber. The chamber was connected to a feeding nozzle and to a valve leading past a filter to a vacuum pump in a first end. The half of the (longitudinal) side wall of the tubular steel chamber being adjacent to the second end opposite of the first end was heated to a first reaction temperature while the other half of the side wall was heated to a second reaction temperature. The chamber was filled with a first reactor gas of nitrogen, hydrogen and/or gas remnants from the previous production, optionally including a fraction of ethene, $C_2H_4$, in an amount giving an initial gas pressure inside the steel chamber when the first reactor gas is in thermal equilibrium with the hot wall of the chamber. Each sample of the particles were produced by the following procedure: Injecting through the feeding nozzle a flow of silane, $SiH_4$, at a first volume flow rate and a preheating temperature of approx. 350 °C and simultaneously a flow of ethene, $C_2H_4$, at a second volume flow rate and a preheating temperature of 350 °C until the pressure inside the steel chamber increased to a second gas pressure, which took approx. 60 seconds and then hold the injected precursor gas mixture in the heated steel chamber for about 45 seconds. The total residence time was about 105 seconds. Then, after reaching the holding time, the gas mixture inside the steel chamber was extracted via the filter by suction created by the vacuum pump. The particles were collected from the reactor walls and the filter.

The applied temperatures, pressures and feed rates and the resulting total carbon content of the formed particles are summarised in Table 3.

The $D_{10}$, $D_{50}$ and $D_{90}$ particle sizes for samples S5 and S6 have been measured by laser diffraction analysis according to standard ISO 13320:2020, and was found to be 3.23, 8.25, and 18.7 $\mu$m for S5 and 3.56, 9.02, and 19.2 $\mu$m for S6. The other samples are expected to be in the same area. This gives a $D_{90}/D_{10}$ of 5.8 and 5.4 for S5 and S6, respectively.

**Table** 3 Some process conditions applied in particle formation plus resulting carbon content

| Sample | Initial pressure [kPa] | End pressure [kPa] | First reactor temp. [°C] | Feed rate silane [slm] | Feed rate ethene [slm] | Carbon content [wt%] |
|---|---|---|---|---|---|---|
| S1 | 20 | 90 | 560 | 8.8 | 3.2 | 13 |
| S2 | 20 | 90 | 560 | 10.3 | 1.7 | 7.7 |
| S3 | 20 | 90 | 560 | 6 | 5.5 | 26 |
| S4 | 20 | 90 | 560 | 8 | 4 | 15 |
| S5 | 30 | 100 | 560 | 9.1 | 2.9 | 12.4 |
| S6 | 30 | 130 | 560 | 9.1 | 2.9 | 12.6 |

Verification of particle structure

The particles in example embodiments S1 to S6 are made with temperature fluctuation during the CVD growth phase due to using two temperature zones in the decomposition reactor. The heated section has the temperature indicated above, while the cooler section including the silane nozzle and the valves is at a lower temperature, probably down to at least 350C. The gas circulates between the hot and cold zones until most of the silane is consumed. This is expected to form the embodiment of the particles having internal shell-resembling layers.

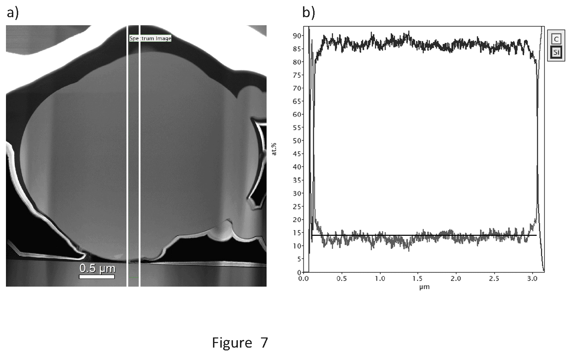

Figures 7a) and 8a) are TEM photographs of two of the particles of the S8 example embodiment of the particle according to the invention having a particle size of about 3 and about 0.8 $\mu$m, respectively. The photographs show that the particles are very dense, with no discernible porosity, and very homogenous with no discernible phases or irregularities. The homogeneous character is confirmed by an electron energy loss spectroscopy (EELS) based elemental composition analysis taken across the particles along the section marked by two white lines in figures 7a) and 8a), respectively. As seen from the EELS-diagrams, the silicon content is the upper line and the carbon content is the lower line, both particles have a substantially homogeneous elemental ratio with an average carbon content of 14 atom% (corresponds to 6.5 wt%).

The expected nanosized crystalline domains of Si and SiC expected to be found in the heat-treated particles are recognizable in the TEM photographs, but because the human eye does not manage to separate their respective lattice constants, a little help is needed to differentiate the phases. The crystal phases may be made visible by a Fourier transformation with band pass-masks centered at 0.314 and 0.252 nm, corresponding to the highest distances between crystal lattice planes in crystalline silicon and silicon carbide, respectively.

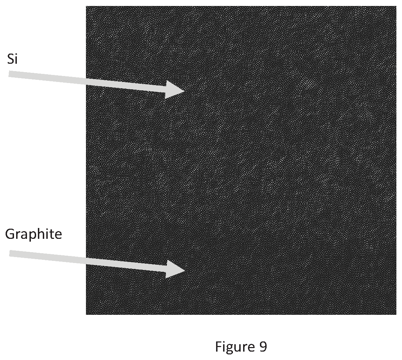

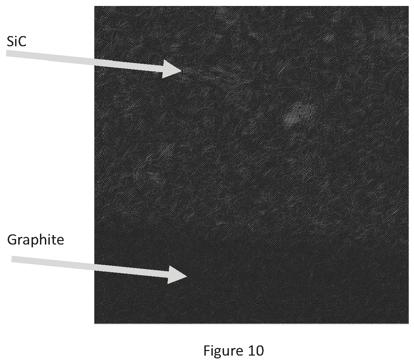

Figure 9 is a photograph showing the result with the transformation with the band pass-masks centered at 0.314 nm of the sample shown in the TEM-photo in figure 7a). The transformation was taken at a section of the particle which includes the graphite substrate at which the particle sample were fixed during the analysis. This graphite is barely visible as a somewhat darker area at the lower part of the photograph covering around 10 % of the area. Above this relatively dark area, there are numerous lighter dots which mark the presence of crystalline silicon. Note the relatively even and homogenous distribution. This indicates that the nanosized domains of silicon are evenly distributed all over the particle. The same impression if found in figure 10 which shows the result for the transformation at the same part of the particle with the band pass-masks centered at 0.258 nm and thus marks the presence of nanoscaled domains of crystalline silicon carbide.

The photographs were overlaid each other with the crystalline phases marked in one colour and the crystalline silicon carbide phases marked in a contrasting colour. This result is not included in the application because it would be impossible to discern the phases from each other in a black and white reproduction. However, the overlayed photographs showed that the silicon crystals and silicon carbide crystals are spacially separated and intertwined as would be expected by a composite structure consisting of a densely packed agglomerate of silicon domains having a layer of amorphous carbon and/or amorphous silicon carbide at the grain boundaries between them, and which was crystallized and collected in crystalline silicon carbide regions in-between the crystalline silicon domains by the annealing.

These results are therefore considered a confirmation that this example embodiment of the particles, manufactured at the relatively low temperature of 560 °C and pressure below one atmosphere, have a similar composite structure as the film of Sung et al. (2021), but that this composition is homogeneous throughout the entire particle from its core to its outer surface. This homogeneity, relatively large particle sizes, and the relatively low particle size distribution makes this particles particularly suited for use as the active material in negative electrodes of secondary LIBs by having a size which gives a high first cycle efficiency, has an even distribution of carbon containing phases providing excellent stability and silicon phases providing excellent lithium diffusivity (conductivity), and at the same time a relatively high silicon loading giving a high volumetric lithium storage capacity by numerous tiny nanoscaled domains which have excellent cyclability because of the stabilizing SiC domains.

Verification of annealing effect

The powders produced above were post-treated in a number of different ways.

More carbon can be applied as a coating to increase the conductivity. Care must be taken to minimize oxygen exposure of the powders before the coating. In the embodiments, the coating has been achieved by gas coating, and wet-chemical coating with carbon precursors. The carbon precursors tested include, polyacrylonitrile (PAN), polystyrene, bitumen (BIT), sugar, phenolic resin and gas phase hydrocarbon coatings. By increasing the temperature to a level where some hydrogen leaves the carbon, a thicker, but still homogeneous, gas phase coating can be achieved. If the coating is applied at a temperature that does not remove all hydrogen, the reorganization in the subsequent pyrolysis at more than 50 °C higher appears to be beneficial for the lithium transport through the layers. All of the above options give lithiation challenges as deposited but can be activated through the heat treatment.

Wet chemical coatings can be performed by any chemist skilled in the art, an involves forming a solution of the carbon precursor, a solvent capable of dissolving the precursor, and the powder to be coated. A mixing and homogenization is normally required, for example using ultrasonication. Finally, the solvent is dried away, for example in a spray drier, a rotavapor, or simply by heating the solution to a point where the solvent evaporates. For the precursors mentioned here, toluene can dissolve bitumen, dimethylformamide can dissolve polyacrylonitrile, tetrahydrofuran can dissolve polystyrene, water or alcohols can dissolve sugars and phenolic resins. The total applied carbon after pyrolysis is a function of the initial carbon -precursor to particle ratio and can be adapted by trial and error to fit any specific coating density. In general, some carbon will be removed during the pyrolysis - how much is removed depends on the furnace, heating profile, precursor quality, powder amount etc. In the experiments described here, combinations were chosen to give a carbon amount after pyrolysis of approximately 1-2 wt% - enough to give conductivity without significantly reducing the mass fraction and thereby capacity of the powder. Further optimization can be performed by any person skilled in the art, as long as it is recognized that the heat treatment has to be sufficient to optimize not only electron, but also lithium transport.

Gas phase coatings can be performed in the same type of reactor as described for the particle production, by heating the powder to the desired temperature, and then exposing it to the desired coating gas. The process can be repeated/continued until the desired thickness is reached, and the thickness can be measured by the methods described above. The process again has to be tuned to match the specifics of the powder (amount, BET ++), but this optimization can be performed by any person skilled in the art. The important realization is that the high temperature posttreatment is needed to form the right quality of carbon in the coating, so the optimization must be performed based on results after heat treatment, not directly after coating.

In all cases the heat treatment was performed with a slow temperature ramp to a plateau where the hydrogen is released from the silicon atoms, continuing to a stage where the carbon precursor is crosslinked, then to a temperature driving out the hydrogen from carbon, and finally reorganizing the carbon. Several of these processes are exothermic, so strict control is needed to avoid overshooting in temperature.

Finally, the powder was used to form electrochemical coin cells. We have used a standard CMC binder with a pH controlled aqueous buffer, and a standard carbonate electrolyte with 2 % fluoroethylene carbonate as the only additive. Coin cells tend to underestimate the FCE, as there are many other surfaces giving losses. The good FCE results demonstrated in this document are therefore expected to become even better in an optimized, commercial battery. The cells with only the silicon powder showed rapid delamination due to the expansion of the silicon, so these cells were only used to quantify capacity and FCE.

For samples with good initial properties, we further made coin cells using a mix of the desired powder with a flaky graphite, to ensure that the degradation was dominated by the silicon degradation, not by delamination. Two examples are shown in Table 4, demonstrating the effect of electrochemical annealing (PAN), as well as the excellent results for an optimally treated particle (BIT).

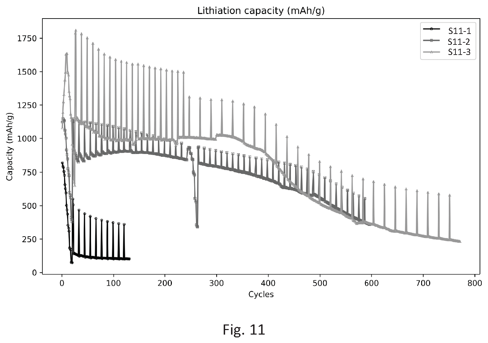

To demonstrate that the post treatment can also be applied to particles from other reactors with similar results, a SiC powder produced by passing a flow of 3:1 silane:ethene was passed through a through-flow reactor. The powder was again heat treated and carbon coated, this time with a sugar precursor. The three different stages of the powder were used to make cells with 50/50 wt graphite and the silicon particles. The result is shown in figure 11. The heat treated particles show a clear improvement over the non-treated particles, with a new improvement for the coated particles, but as the treatment was only to 820 °C, the electrochemical annealing can again be seen in the initial capacity increase.

Table 4 Summary of particles applied in the verification of the annealing effect

| Sample ID | Starting powder total C [wt%] | Coating type | Final Heat treatment max T [°C] | Heating rate for final stage [°C/min] | Si peak FWHM | SiC peak FWHM | FCE [%] | Capacity [mAh/g] |
|---|---|---|---|---|---|---|---|---|
| S1 | 13,0 | None | none | | amorph | amorph | 63 | 844 |
| S1 | 13,0 | None | 850 | 1 | 6.86 | 5.79 | 79 | 1744 |
| S9 | 12.5 | PAN | 500 (after 650 °C dehy) | 1 | amorph | amorph | 88 | 2410 |
| S10 | 12.6 | BIT | 900 | 1 | | | 85 | 1998 |
| S18 | 12.8 | Gas | | | amorph | amorph | 14.7 | 100.4 |
| S18 | 12.8 | Gas | 860 | 1 | 6.38 | 5.36 | 75 | 1642 |
| S18 | 12.8 | Gas | 900 | 1 | 3.00 | 4.48 | 83 | 1910 |

<u>Further verification of the invention</u>

To further demonstrate the invention, a series of particles were produced according to the same method as for the particles above labelled as S1, but with variation in the $SiH_4:C_2H_4$ ratio resulting in a variation of carbon content. The carbon content was assessed through combustion measurements, as described above, and was measured to be [8, 11, 13, 15, 17, 19] wt% carbon, respectively. These samples were given a thin gas-based carbon coating through CVD of ethene gas at roughly 600 °C, and then annealed at temperatures of [700, 800, 900, 1000, and 1100] °C, respectively. The ramp rate when approaching the peak temperature was in the range 0,4-1 °C/s.

All powders were characterized with XPD as described above, and estimates for crystallite sizes for Si and SiC were calculated by Rietveld refinement of X-ray Powder diffraction (XPD) of the particles.

The powders were then electrochemically characterized in cells where the active anode material consisted of 85 wt% of the relevant powder vs 15 wt% graphite. In addition, there was conductive carbon and binder in the same ratios vs the active material as described above. These cells were used to obtain data for the lithiation capacity during the first cycle, and the First Cycle Coulombic Efficiency (FCE).

A series of samples of particles made as shown in the example above having a total carbon content of 8 wt% (approx. 16.9 atom%), a second series of similar particles having a total carbon content of 11 wt% (approx. 22.4 atom%), a third series of similar particles above having a total carbon content of 13 wt% (approx. 25.9 atom%), a fourth series having a total carbon content of 15 wt% (approx. 29.2 atom%), a fifth series having a total carbon content of 17 wt% (approx. 32.4 atom%), and a sixth series of samples of similar particles having a total carbon content of 19 wt% (approx. 35.4 atom%) were subject to an annealing at a temperature of 600, 700, 800, 900, 1000, and 1100 °C, respectively.

Figures 17, 18, 19 and 20 show the Si and SiC crystallite sizes, the initial cell lithiation capacity(mAh/g) and the FCE for the combinations that were measured. If a value was not measured, it is given a placeholder value in the graph to increase readability. For amorphous samples, a crystallite size of 0,2 has been arbitrarily chosen to indicate samples measured to be amorphous.

These graphs clearly indicate that for a given carbon content, Si and SiC crystallization occurs at some temperature between 800 and 900 °C, and that the crystallite sizes increases with the peak temperature. It must be assumed that a similar trend exists for increased annealing times and slower ramp rates.

For the lowest carbon contents (8 wt%), the capacity is significant already before annealing, indicating that the carbon-rich phases to not significantly hinder the lithium diffusion. For higher carbon contents, an annealing is required to obtain significant capacity, and the transition appears to be correlated with the phase separation into nano-crystallites, as claimed in the invention, but there is no obvious further increase in capacity as the crystallite sizes grow. From the capacity data, it can therefore be assumed that the annealing should be performed only to the temperature giving this first crystallization, but based on the literature quoted above, the crystallites should be kept as small as possible.

From the FCE data, a similar conclusion can be reached. The FCE in these cells is not a direct measurement of the material FCE, but is affected by the same factors that will affect lifetime of the cell. FCE is reduced by surface area, surface degradation, particle cracking, loss of contact to individual particles and electrode delamination. All these factors will also influence the cycle life of the cell. Because the surface area for these samples of particles is very similar, the FCE is mainly an expression of the strains that could lead to reduced cell lifetime. The low FCE very low C particles is assumed to be largely due to the large expansion, and lack of structural stability. For the particles with the highest C-content, the FCE is negatively affected by the lack of capacity, meaning that similar first cycle losses are divided by a lower first cycle capacity. It appears that the FCE has an optimal value for the intermediate heat treatments, giving optimal stability at the highest capacity.

In order to get a correct assessment of the actual FCE of the powder, a series of cells were prepared were the ratio of silicon composite powder according to the invention to graphite was varied. For this test, a powder with 15 wt% carbon was used, and the powder made up [15, 25, 35, 50] wt% of the active anode material. The FCE of a number of these cells was measured, and is plotted in figure 21. It clearly shows that the FCE increases with the fraction of the powder of the invention, which must therefore have a higher FCE than the graphite it replaces. By extrapolating to 100%, it can be assessed that the FCE of the powder used for these cells is as high as 95-96%, even though the cells with 85% silicon powder only show 85-86% due to issues such as loss of electrical contact in the electrode.

Verification of milling effect

Materials made by injecting a homogeneous first mixture of silane gas and ethene gas in a molar ratio of 3.1:1 was heated to a preheating temperature of 300 °C and thereafter introduced into a reactor chamber where the homogeneous precursor gas mixture was fed into a closed chamber with some preheated gas (remains from previous production batch) to form a second gas mixture having a temperature of 560 °C. This relatively low reaction temperature ensures that the variations in dilution/heating become less important for the particle production. The second gas mixture is maintained for 45 second long residence time, during which the chemistry is allowed to consume reactant species and increase particle sizes. Finally, the gas is pumped from the chamber, stopping the reaction. This ensures a very similar history for all particles, and a very homogeneous size distribution with while maintaining good silane and carbon precursor yields. The particles have afterwards been exposed to a relatively gentle jet milling with the use of Spiral Jet Mill SSM 100 from Schedio.

An example of the resulting particles can be seen in Figure 24a) and 24b). Most of the surfaces are completely untouched, but the longest chains of particles are broken into more homogenously sized subsections. Using a feed-rate of 1.9 kg/hr a grinding pressure of 3.5 bar and a feeding pressure of 6 bar resulted in the D90/D10 ratio declining from 4.5 to 2.6, and the BET surface area was still only 2 m$^2$/gram.

This improvement is probably valuable because it will make it possible to distribute the silicon composite material more evenly in the anode (the largest trolls are gone) when mixed with graphite. The material can also easily be recognized as it consists largely of spherical particles, but among which some of the surfaces are the result of a broken chain or sphere.

Figure 25, which zooms in on a few particles from the SEM photograph shown in figure 24b), illustrates how the majority of the circumference lines of the particles are circular arcs. The circumference parts which are the result of breakage due to the milling process and does not form part of an arc/circle are marked with a dotted line in figure 25.

**References**

1 Sourice et al. (2016), "Core-shell amorphous silicon-carbon nanoparticles for high performance anodes in lithium-ion batteries", Journal of Power Sources, vol. 328, pp. 527-535.

2 Orthner et al. (2021), "Direct gas phase synthesis of amorphous Si/C nanoparticles as anode material for lithium ion battery", Journal of Alloys and Compounds, 870 (2021), 159315, https://doi.org/10.1016/j.jallcom.2021.159315

3 Wang Y.K., Chou S. L., Kim J. H., Liu H. K. and Dou S. X., "Nano-composites of silicon and carbon derived from coal tar pitch: Cheap anode materials for lithium-ion batteries with long cycle life and enhanced capacity" Electrochim. Acta, 2013, 93 , 213 -221.

4 Zhu et al. (2018), "Correlation between the physical parameters and the electrochemical performance of a silicon anode in lithium-ion batteries", Journal of Materiomics, 5, (2019), pp. 164 - 175, https://doi.org/10.1016/j.jmat.2019.03.005

5 Rhenlund et al. (2017), "Lithium trapping in alloy forming electrodes and current collectors for lithium based batteries", Energy Environ. Sci., 10, pp. 1350 - 1357, DOI: 10.1039/c7ee00244k

6 Sung et al. (2021), "Subnano-sized silicon anode via crystal growth inhibition mechanism and its application in a prototype battery pack", Nature energy, VOL 6, DECEMBER 2021, pp. 1164-1175, https://doi.org/10.1038/s41560-021-00945-z

7 B.H. Toby, R.B. Von Dreele, GSAS-II: the genesis of a modern open-source all purpose crystallography software package, Journal of Applied Crystallography, 46 (2013) 544-549.

8 A.A. Coelho, TOPAS and TOPAS-Academic: an optimization program integrating computer algebra and crystallographic objects written in C plus, Journal of Applied Crystallography, 51 (2018) 210-218.

9 R.W. Cheary, A.A. Coelho, J.P. Cline, Fundamental parameters line profile fitting in laboratory diffractometers, Journal of Research of the National Institute of Standards and Technology, 109 (2004) 1-25.

10 P. Thompson, E.D. Cox, J.B. Hastings, Rietveld Refinement of Debye-Scherrer Synchrotron X-ray Data from Al2O3, Journal of Applied Crystallography, 20 (1987) 79-83.

**Claims**

1. Silicon-based composite particles, wherein the silicon-based particles have a total chemical composition comprising:

   - a total content of carbon, $C_{total}$ being from 5 to 50 atom%, based on the total mass of the silicon-based composite particles, and
   - the rest being silicon and unintentional impurities,
   **characterised in that**

      - the silicon-based particles are made of a bulk material,
      - the bulk material comprises a plurality of nanoscaled silicon domains embedded in a first matrix comprising nanoscale silicon carbide domains, and
      - the particles, when subjected to XRD analysis applying unmonochromated CuK$\alpha$ radiation, exhibit one peak at around 28° having a Full Width at Half Maximum (FWHM) in the range from 0.5° to 8° and one peak around 36° having a FWHM in the range from 1° to 10°,

   and wherein the particles:

      - have a median volume-weighted diameter, $D_{50}$, in the range from 1 to 9 $\mu$m, and
      - a volume weighted diameter ratio $D_{90}/D_{10}$ in the range from 1 to 9,

and wherein

- the $D_{10}$, $D_{50}$, and $D_{90}$ volume weighted particle diameters are determined by laser diffraction analysis according to standard ISO 13320:2020.

2. The particles of claim 1, wherein the particles, when subjected to XRD analysis applying unmonochromated CuK$\alpha$ radiation, exhibit:

- one peak at around 28° having a Full Width at Half Maximum (FWHM) in the range from 0.8° to 7.5°, preferably from 1.2° to 7.0°, more preferably from 1.4° to 6.5°, more preferably from 1.7° to 6.0°, more preferably from 2.0° to 5.5°, more preferably from 2.3° to 5.0°, more preferably from 2.6° to 4.5°, and most preferably from 2.9° to 4.0°, and
- one peak at around 36° having a Full Width at Half Maximum (FWHM) in the range from 1.25° to 9.0°, preferably from 1.5° to 8.0°, more preferably from 1.75° to 7.0°, more preferably from 2.0° to 6.0°, more preferably from 2.5° to 5.0°, and most preferably from 3.0° to 4.0°,

3. The particles of claim 1 or 2, wherein the chemical composition comprises:

- a total content of carbon, $C_{total}$ being from 7 to 45 atom%, preferably from 10 to 40 atom%, more preferably from 15 to 35 atom%, more preferably from 20 to 30 atom%, and most preferably from 23 to 27 atom%, based on the total mass of the silicon-based composite particles, and
- the rest being silicon and unintentional impurities.

4. The particles according to any preceding claim, wherein

- the average diameter of the nanosized silicon carbide domains is in the range from 0.5 to 10 nm, preferably from 1 to 8 nm, more preferably from 2 to 7 nm, more preferably from 3 to 6 nm, more preferably from 4 to 5 nm as determined by Rietveld refinement of X-ray Powder diffraction (XPD) data, if necessary, after exposing the silicon-based composite particles to a annealing which crystallizes the nanosized silicon carbide domains therein, and
- the average diameter of the nanosized silicon domains is in the range from 0.5 to 10 nm, preferably from 1 to 8 nm, more preferably from 2 to 7 nm, more preferably from 3 to 6 nm, more preferably from 4 to 5 nm, more preferably from 0.75 to 7.5 nm, more preferably from 1 to 5 nm, more preferably from 1.25 to 4 nm, more preferably from 1.5 to 3 nm, more preferably from 1.75 to 2.75 nm, and most preferably from 2 to 2.5 nm as determined by Rietveld refinement of X-ray Powder diffraction (XPD) data, if necessary, after exposing the silicon-based composite particles to a annealing which crystallizes the nanosized silicon domains therein.

5. The particles according to any preceding claim, wherein the particles

- have a median volume-weighted diameter, $D_{50}$, from 1.1 to 8 $\mu$m, more preferably from 1.2 to 7 $\mu$m, more preferably from 1.6 to 6 $\mu$m, and most preferably from 2.0 to 5 $\mu$m, as determined by laser diffraction analysis according to the standard ISO 13320:2020, and
- have a $D_{90}/D_{10}$ ratio in the range from 1.5 to 8, preferably from 2 to 7, more preferably from 2 to 6, and most preferably from 3 to 5, as determined by standard ISO 13320:2020.

6. The particles according to any preceding claim, wherein the particles further comprise:

- one or more internal shell-resembling spatial regions within the bulk material of the particles having an increased carbon content with a peak in the elemental carbon content, $C_{peak}$, being from 1 to 15 atom percentage points higher than an average carbon content, $C_{average}$, and wherein
- the peak in the elemental carbon content, $C_{peak}$, of each of the one or more internal shell-resembling spatial regions within the bulk material and the average carbon content, $C_{average}$, are determined by electron energy loss spectroscopy elemental analysis taken along a straight line running from at least the particle core up to but not including the particle surface, and wherein variations in the less than 5 nm length scale, preferably less than 2 nm length scale, and most preferably less than 1 nm length scale are smoothed out.

7. The particles according to any preceding claim, wherein the $C_{peak}$ is in the range from 1 to 12 atom percentage points, preferably from 1 to 10 atom percentage points, more preferably from 2 to 8 atom percentage point, more preferably from 3 to 6 atom percentage points, and most preferably from 4 to 5 atom percentage points higher than the average carbon content, $C_{average}$.

8. The particles according to any of the preceding claims, wherein the determination of the $C_{peak}$ of the at least one shell-resembling relatively carbon-rich layer by electron energy loss spectroscopy elemental analysis is obtained by:

   - preparing a cross-sectional slice of less than 70 nm thickness including the particle centre of the particle by focused ion beam (FIB),
   - performing the EELS elemental analysis along a linear line running through the cross-section from the centre to the outer surface of the slice, and then
   - optionally, smoothening the measurements by using a gaussian digital filter or by averaging the measurements made for a plurality of neighbouring spatial measuring-areas, and
   - applying the local maximum for the carbon content of a first peak in the carbon content along said line at a distance from the particle centre to define the $C_{peak}$ of the first peak and if present, make a similar determination of the $C_{peak}$ for each other corresponding pair of peaks of increased carbon content and decreased silicon content present on said line, and
   - determining the $C_{average}$ by averaging the determined C-content of all measurement points along the line except for the outer surface region.

9. The particles according to any of the preceding claims, wherein the smoothening out of the variations of the electron energy loss spectroscopy elemental analysis is obtained by

   either:

   - using a gaussian digital filter having a width of the digital filter of < 5 nm , preferably < 2 nm, and most preferably < 1 nm,

   or:
   averaging the measurements made for a plurality of neighbouring spatial measuring-areas.

10. The particles according to any of the preceding claims, wherein the particles further comprises an outer coating on its outer surface, where the coating is:

    either:

    - one or more of: an amorphous or crystalline carbon allotrope, an oxide chosen from $Li_xSi_yO$, $Ti_xO$, or $Al_xO$, or a metal-organic framework and
    - have a thickness in the range of from 1 to 100 nm, preferably from 2 to 60 nm, more preferably from 3 to 20 nm, and most preferably from 3 to 10 nm.

    or:

    - an amorphous or crystalline carbon layer having a thickness in the range of from 0.5 to 20 nm, preferably from 1 to 10 nm, and most preferably from 2 to 7 nm as determined by Auger spectroscopy.

11. The particles according to any of the preceding claims, wherein the particles conductivity is higher than $1\cdot10^{-6}$ S/cm, preferably $> 1\cdot10^{-5}$ S/cm, more preferably $> 1\cdot10^{-4}$ S/cm, more preferably $>1\cdot10^{-3}$ S/cm, more preferably $> 1\cdot10^{-2}$ S/cm, and most preferably $>1\cdot10^{-1}$ S/cm, when measured in a cylindrical pellet with 1 cm diameter under a pressure of 4 tons.

12. The particles according to any preceding claim, wherein the particles further comprises gently milled particles having a largely spherical shape as determined by the following criteria:

    - at least 50 %, preferably at least 60%, more preferably at least 70 %, more preferably at least 80 %, more preferably at least 90 %, and most preferably at least 95 % of all subsections of particle circumference lines apparent in a SEM picture of the material are circular arcs,
    - each circular arc in the a SEM picture has an arc length, s, being determined by the relation $s = r\cdot\pi/180\cdot\theta$, where r is the radius of a circle having the same curvature of its circumference line as said circular arc, $\pi$ is a mathematical constant equal to the ratio of a circle's circumference line to its diameter, and $\theta$ is the angle in degrees which said circular arc subtends at the centre of the said circle, and
- said angle $\theta$ is in the range from 10 to 360°.

13. The particles according to any preceding claim, wherein the particles have a BET surface area, as determined by standard ISO 9277:2010, from 0.2 to 10 $m^2/g$, preferably from 0.3 to 8 $m^2/g$, more preferably from 0.4 to 6 $m^2/g$, and most preferably from 0.5 to 4 $m^2/g$.

14. A negative electrode for a secondary lithium-ion electrochemical cell, comprising:

   - an active material,
   - a binder material, and
   - a current collecting substrate,

   **characterized in that** the active material is a silicon-based particle according to any of claims 1 to 13.

15. Use of a particle according to anyone of claims 1 to 13 in a secondary lithium-ion electrochemical cell.

Figure 1    Facsimile of fig. 1 of Sung et al. (2021) [Ref 6]

Figure 2

Figure 3

Figure 4

Figure 5

Figure 6

a)

b)

Figure 7

a)

b)

Figure 8

Si

Graphite

Figure 9

SiC

Graphite

Figure 10

Fig. 11

Fig. 12

Fig. 13

a)

b)

Figure 14

a)
b)

2θ

Figure 15

Figure 16

a)

Si Crystallite Size (nm)

b)

Si Crystallite Size (nm)

Figure 17

Figure 18

Figure 19

Figure 20

FCE vs Silicon-based powder mass% of anode active material (SiC vs Graphite content)

Figure 21

Si peak FWHM

Figure 22

Figure 23

a)                                              b)

Fig. 24

Fig. 25

# EP 4 779 721 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021160824 A
- WO 2022200606 A
- CN 115881931 A1
- EP 22158616

### Non-patent literature cited in the description

- **SOURICE et al.** Core-shell amorphous silicon-carbon nanoparticles for high performance anodes in lithium-ion batteries. *Journal of Power Sources*, 2016, vol. 328, 527-535
- **ORTHNER et al.** Direct gas phase synthesis of amorphous Si/C nanoparticles as anode material for lithium ion battery. *Journal of Alloys and Compounds*, 2021, vol. 870, 159315, https://doi.org/10.1016/j.jallcom.2021.159315
- **WANG Y.K.** ; **CHOU S. L.** ; **KIM J. H.** ; **LIU H. K.** ; **DOU S. X.** Nano-composites of silicon and carbon derived from coal tar pitch: Cheap anode materials for lithium-ion batteries with long cycle life and enhanced capacity. *Electrochim. Acta*, 2013, vol. 93, 213-221
- **ZHU et al.** Correlation between the physical parameters and the electrochemical performance of a silicon anode in lithium-ion batteries. *Journal of Materiomics*, 2018, vol. 5 (2019), 164-175, https://doi.org/10.1016/j.jmat.2019.03.005
- **RHENLUND et al.** Lithium trapping in alloy forming electrodes and current collectors for lithium based batteries. *Energy Environ. Sci.*, 2017, vol. 10, 1350-1357
- **SUNG et al.** Subnano-sized silicon anode via crystal growth inhibition mechanism and its application in a prototype battery pack. *Nature energy*, December 2021, vol. 6, 1164-1175, https://doi.org/10.1038/s41560-021-00945-z
- **B.H. TOBY** ; **R.B. VON DREELE**. GSAS-II: the genesis of a modern open-source all purpose crystallography software package. *Journal of Applied Crystallography*, 2013, vol. 46, 544-549
- **A.A. COELHO**. TOPAS and TOPAS-Academic: an optimization program integrating computer algebra and crystallographic objects written in C plus. *Journal of Applied Crystallography*, 2018, vol. 51, 210-218
- **R.W. CHEARY** ; **A.A. COELHO** ; **J.P. CLINE**. Fundamental parameters line profile fitting in laboratory diffractometers. *Journal of Research of the National Institute of Standards and Technology*, 2004, vol. 109, 1-25
- **P. THOMPSON** ; **E.D. COX** ; **J.B. HASTINGS**. Rietveld Refinement of Debye-Scherrer Synchrotron X-ray Data from Al2O. *Journal of Applied Crystallography*, 1987, vol. 20, 79-83